(19) Europäisches Patentamt
European Patent Office
Office européen des brevets

(11) EP 3 838 859 A1

(12) EUROPÄISCHE PATENTANMELDUNG

(43) Veröffentlichungstag:
23.06.2021 Patentblatt 2021/25

(51) Int Cl.:
C03C 3/091 (2006.01)    C03B 1/00 (2006.01)
C03C 1/00 (2006.01)

(21) Anmeldenummer: 20213350.0

(22) Anmeldetag: 11.12.2020

(84) Benannte Vertragsstaaten:
AL AT BE BG CH CY CZ DE DK EE ES FI FR GB
GR HR HU IE IS IT LI LT LU LV MC MK MT NL NO
PL PT RO RS SE SI SK SM TR
Benannte Erstreckungsstaaten:
BA ME
KH MA MD TN

(30) Priorität: 20.12.2019 DE 102019135597

(71) Anmelder: Schott AG
55122 Mainz (DE)

(72) Erfinder:
• Lautenschläger, Gerhard
07743 Jena (DE)

• Fotheringham, Ulrich
65191 Wiesbaden (DE)
• Hochrein, Oliver
55130 Mainz (DE)
• Kugelmann, Helmut
86156 Augsburg (DE)
• Sprenger, Andreas
07751 Rothenstein (DE)
• Alkemper, Jochen
55270 Klein-Winternheim (DE)

(74) Vertreter: Fuchs Patentanwälte Partnerschaft
mbB
Westhafenplatz 1
60327 Frankfurt am Main (DE)

(54) THERMISCH VORSPANNBARE BOROSILICATGLÄSER

(57) Die Erfindung betrifft Borosilicatgläser, insbesondere Flachgläser, die eine optimale thermische Vorspannbarkeit aufweisen und als thermisch vorgespannte hochfeste Flachglasprodukte für Sicherheitsverglasungen unter anderem im Bauwesen, für Fahrzeugverglasungen und für Anwendungen im Home Tech Bereich verwendet werden können. Insbesondere zeichnen sie sich durch einen hohen Elastizitätsmodul, einen gewünschten thermischen Ausdehnungskoeffizienten unterhalb und einen hohen thermischen Ausdehnungskoeffizienten oberhalb des Glastransformationsbereiches sowie gewünschte Werten für den oberen Kühlpunkt und den Verarbeitungspunkt aus.

EP 3 838 859 A1

**Beschreibung**

**Gebiet der Erfindung**

Die Erfindung betrifft Borosilicatgläser, insbesondere Flachgläser, die eine optimale thermische Vorspannbarkeit aufweisen und als thermisch vorgespannte hochfeste Flachglasprodukte für Sicherheitsverglasungen unter anderem im Bauwesen, für Fahrzeugverglasungen und für Anwendungen im Home Tech Bereich verwendet werden können.

Insbesondere zeichnen sie sich durch einen hohen Elastizitätsmodul, einen gewünschten thermischen Ausdehnungskoeffizienten unterhalb und einen hohen thermischen Ausdehnungskoeffizienten oberhalb des Glastransformationsbereiches sowie gewünschte Werten für den oberen Kühlpunkt und den Verarbeitungspunkt aus.

**Stand der Technik**

Die Erhöhung der Bruchfestigkeit von Glas durch thermisches Vorspannen ist seit langem Stand der Technik. Über die Theorie des thermischen Vorspannens und die Berechnung der hierbei entstehenden Spannungsprofile gibt es viele Arbeiten. Hier sind einige Beispiele: Gardon, R.: Calculation of temperature distribution in glass plates undergoing heat treatment J. Am. Ceramic. Soc. 41 (1958), S. 200-209, Blank, K.: Thermisch vorgespanntes Glas Teil 1, Glastechnische Berichte 52 (1979), S. 1-13, Oel, H.J. u,a,: Thermisches Vorspannen von Glas-scheiben, Glastechnische Berichte 57 (1984), S.1-6, Hennig, M., Wiltzsch, S.: Thermisches Härten dünner Kalk-Natron-Flachgläser, HVG- Mitteilung Nr. 2137 (2008), Bach, H., Neuroth, N.: The Properties of Optical Glass, Strengthening of Glass, Springer Verlag 1998, S. 196 - 200.

Thermisch vorgespannte Gläser werden für viele Anwendungen benötigt, insbesondere für Anwendungen im Bereich Sicherheitsglas. Besondere Anforderungen werden dabei gestellt, wenn zusätzlich zu den Sicherheitsglaseigenschaften noch Brandschutzeigenschaften gefordert werden.

Bereits bei kurzzeitiger Hitzeeinwirkung bersten übliche, nicht vorgespannte Kalk-Natronflachgläser nach kurzer Zeit. Großflächig herausfallende Glasbruchstücke ermöglichen den Feuerüberschlag in die angrenzenden Räume. Früher wurde deshalb versucht durch Einlegen eines Drahtgeflechtes das Zerbrechen der Glasscheiben zu verhindern (Drahtglas).

Brandschutzgläser müssen die Bedingungen der Feuerwiderstandsklassen G und F erfüllen (nach DIN 4102 Teil 13/ISO 834 bzw. der Feuerwiderstandsklassen E, EW und EI nach EN 13501). Dabei müssen die Verglasungen einschließlich der Rahmen und der Halterungen nach einer Einheitstemperaturzeitkurve (ETK) den Flammen- und Brandgasdurchtritt mindestens 30 bzw. 60, 90 oder 120 Minuten verhindern, um die Klassen G 30, G 60, G 90 oder G 120 zugeteilt zu werden.

Analoge Vorschriften gelten für die Klassen F 30, F 60, F 90 und F 120. Dabei darf das Glas auf der dem Feuer abgewandten Seite sich im Mittel nicht mehr als 140 °C über die Anfangstemperatur erwärmen.

An Gebäudeverglasungen werden oftmals zusätzliche Anforderungen gestellt. So müssen Verglasungen in Türen neben dem Brandschutz auch die Verkehrssicherheit gewährleisten. Die Verglasungen müssen nicht nur die Brandschutznormen erfüllen, sondern auch die Anforderungen der Sicherheitsnormen, wie z.B. Einscheibensicherheitsglas ESG (DIN 1249 Teil 12 bzw. DIN EN 12150).

Die Anforderungen an ESG nach DIN EN 12150 sind:

- eine Biegezugfestigkeit von mindestens 120 MPa, wobei die erhöhten Festigkeiten durch Druckspannungen an der Oberfläche hervorgerufen werden.

- Bei einem Bruch der Glasplatte muss diese in sehr viele kleine Bruchstücke in Form eines Krümelbruchs zerspringen.

- Mindestanzahl an Bruchstücken für eine Fläche von 50x50mm$^2$ und eine Glasdicke von 4 bis12 mm: 40

Produkte auf Basis von thermisch vorgespannten Kalk-Natron-Flachgläsern finden z.B. Anwendung als ESG im Bauwesen, für Fahrzeugverglasungen und als Glasabdeckung für PV-Module. Der Einsatz als Brandschutzverglasung ist allerdings nur eingeschränkt möglich und muss explizit nachgewiesen werden.

Thermisch vorgespannte Kalk-Natron-Gläser im Dickenbereich 6-15 mm können Feuerwiderstandszeiten von 30 - 60 Minuten erreichen. Nachteil dieser Gläser ist, dass sie während der Temperaturbelastung durch die Einheitstemperaturzeitkurve (ETK) bereits zu einem frühen Zeitpunkt ihre Erweichungstemperatur überschreiten und in einem viskosen plastischen Zustand übergehen, sich verformen und dann aus dem Rahmen rutschen können. Hauptgrund ist die Erweichungstemperatur von Kalk-Natron-Glas (EW; d.i. die Temperatur bei $10^{7,6}$ dPas), die mit ca. 720 °C zu niedrig ist. Weitere Einflussfaktoren sind die Scheibengröße, die Scheibendicke, die Breite der Randabdeckung, die Haltekräfte der Scheibe und die Beschaffenheit des Rahmenmaterials. Je breiter die Randabdeckung der Scheibe ist, umso länger wird ein Herausrutschen der Glasscheibe aus den Randbereichen verhindert, wenn die Gläser im Verlaufe der Brandbelastung ihre Erweichungstemperatur erreicht haben.

Gleichzeitig bestimmt aber die Breite des abgedeckten Randbereiches zusammen mit dem linearen thermischen Längenausdehnungskoeffizienten des Glases unterhalb des Glasübergangs ($CTE_{Glas}$), der i.a. als sogenannter $CTE_{20/300}$ gemessen wird, die Höhe der bei der Brandbelastung zwischen heißer freistehender Scheibenmitte und kaltem abgedecktem Scheibenrand entstehenden Spannungen. Überschreiten im Brandfall diese Spannungen die Festigkeit des Glases, so kommt es unweigerlich zum Bruch der Glasscheibe und somit zum vollkommenen Verlust der Brandschutzwirkung. Aus diesem Grunde ist es nicht möglich, die Randabdeckung der Scheibe beliebig groß zu wählen, um eine möglichst hohe Feuerwiderstandzeit zu erreichen.

Es ist auch bereits versucht worden, zur Erreichung von höheren Feuerwiderstandzeiten bei Kalk-Natron-Gläsern Mehrschichtverbundglassysteme zu entwickeln. Hierbei werden mehrere zum Teil thermisch vorgespannte Kalk-Natron-Glas-Scheiben mit dazwischenliegenden Wärmeabsorptionsschichten verbunden. Derartige Verbundgläser haben aber den Nachteil, dass sie zur Erreichung höherer Feuerwiderstandsklassen viele Glasschichten und Wärmeabsorptionsschichten aufweisen müssen. Diese Systeme haben eine große Dicke und ein großes Gewicht, wodurch sich Einbau und Rahmenkonstruktion verkomplizieren und verteuern.

Neben Kalk-Natron-Glas mit einem $CTE_{Glas}$ von ca. $9 \times 10^{-6}K^{-1}$ werden aber auch technische Spezialgläser thermisch vorgespannt. Diese Spezialgläser haben niedrigere $CTE_{Glas}$-Werte von 3,0 bis $5,0 \times 10^{-6}K^{-1}$. Dies verhindert einerseits, dass die im Brandfall auftretenden zusätzlichen thermischen Spannungen zu groß werden. Dies steht aber wiederum andererseits im Konflikt mit der thermischen Vorspannbarkeit, siehe u.a. Werner Kiefer, Thermisches Vorspannen von Gläsern niedriger Wärmeausdehnung, Glastechnische Berichte 57 (1984), Nr. 9, S. 221-228. Dort wird der thermische Vorspannprozess einer Glasscheibe (Erwärmen auf eine Temperatur von beispielsweise 100K oberhalb des oberen Kühlpunktes, schockartiges Kühlen durch Anblasen o.ä.) eingehend beschrieben.

Nach Kiefer, loc. cit. beträgt die thermische Vorspannung $\sigma$ einer Glasscheibe

$$\sigma = \frac{\Delta T \cdot CTE_{Glas} \cdot E}{1 - \mu} \qquad (1)$$

Dabei ist E das Elastizitätsmodul, $\mu$ die Poissonzahl und $\Delta T$ die Differenz zwischen der Oberflächentemperatur und der Kerntemperatur der Scheibe in dem Moment, wenn die Kerntemperatur bei der Schockkühlung den oberen Kühlpunkt durchschreitet. Für $\Delta T$ gilt nach Kiefer, loc. cit.:

$$\Delta T = \frac{h \cdot d}{4 \cdot \kappa + h \cdot d} \cdot (T_G - T_{ambient}) \qquad (2)$$

Dabei ist h der Wärmeübergangskoeffizient zwischen der Scheibe und dem Kühlmedium, beispielsweise Blasluft, d die Scheibendicke, $\kappa$: die Wärmeleitfähigkeit des Glases und $T_{ambient}$ die Temperatur des Kühlmediums.

$T_G$ ist eine Diskretisierung des Glasübergangsbereiches in dem Sinne, dass Spannungen oberhalb von $T_G$ relaxieren und unterhalb von $T_G$ nicht mehr. Genau genommen hängt diese Temperatur von der Kühlgeschwindigkeit ab. Der bestgeeignete kühlgeschwindigkeitsunabhängige Schätzwert ist der obere Kühlpunkt. Deshalb wird $T_G$ in der vorliegenden Offenbarung mit dem oberen Kühlpunkt OK identifiziert.

In der Literatur, wie beispielsweise Kiefer, loc. cit., wird oft die Glastransformationstemperatur anstelle der obigen Diskretisierung verwendet wird. Dies ist nicht zu 100% korrekt, da sich die Glastransformationstemperatur auf Strukturrelaxation, nicht auf Spannungsrelaxation bezieht. Allerdings hat dies keinen großen Einfluss, da der Unterschied zwischen dem oberen Kühlpunkt und der Glastransformationstemperatur so gering ist, dass ($T_G - T_{ambient}$) und (OK-$T_{ambient}$) beinahe identisch sind.

Nach (1) folgt aus einer Obergrenze für $\alpha_{Glas}$ offensichtlich eine drastische Einschränkung der thermischen Vorspannbarkeit. Diese Einschränkung wird bei festen Werten für E, $\mu$, $\kappa$, $T_G$ und h über (2) an die Scheibendicke weitergereicht, d.h.: will man trotz der Obergrenze für $CTE_{Glas}$ eine bestimmte Vorspannung erreichen, so darf eine bestimmte Scheibendicke nicht unterschritten werden. Dies hat die unerwünschte Folge eines großen Scheibengewichtes.

Es sind Anstrengungen unternommen worden, den Wärmeübergangskoeffizienten h zu maximieren. Dazu gehört u.a. die Wahl von ölüberschichtetem Wasser als Kühlmedium, siehe Kiefer, loc. cit., was wiederum zu einer unerwünschten Brandgefahr führt. Bezüglich des Anblasens mit Luft ist das technisch Mögliche ausgereizt (Prallströmung aus Düsenfeldern), siehe Carl Kramer, Alfred Mühlbauer, Praxishandbuch Thermoprozess-Technik, Bd. 1, Vulkan Verlag, Essen (2002).

Aus den genannten Gründen sind aktuell keine gleichzeitig als Sicherheitsglas und für Brandschutzzwecke G 120 bis G 180 verwendbaren Borosilicatgläser bekannt, die bei einer Scheibendicke von weniger als 6 mm auf herkömmlichen Luftvorspannungsanlagen die für Sicherheitsglas geforderte Vorspannung erreichen.

Dies gilt auch bei Berücksichtigung eines Effektes, der in Kiefer, loc. cit., vernachlässigt wird, aber einen Beitrag zur Vorspannung leistet. Infolge der unterschiedlichen Kühlgeschwindigkeiten an der Scheibenoberfläche (schnell wegen des direkten Kontaktes zum Kühlmedium) und im Scheibenkern (relativ langsam wegen der geringen Wärmeleitung vom Kern an die Oberfläche) nimmt die fiktive Temperatur des Glases im Kern einen geringeren Wert an als an der Oberfläche. Damit verbunden ist ein Schrumpf des Kerns gegenüber der Oberfläche, der zu einer Erhöhung der Vorspannung führt. Dieser Effekt ist ausführlich in F. Mauch, J. Jäckle, Thermoviscoelastic theory of freezing of stress and strain in a symmetrically cooled infinite glass plate, Journal of Non-Crystalline Solids 170 (1994) 73-86, beschrieben. Als maßgebliche Kennzahl für diesen Effekt ergibt sich bei einem festen Wert für $CTE_{Glas}$ der Wert für die thermische Ausdehnung oberhalb des Glasübergangsbereiches $CTE_{liquid}$, der möglichst hoch sein sollte.

Zur bevorzugten Verwendung von Borosilicatgläsern ist noch zu sagen, dass zur Erzielung einer möglichst hohen Vorspannung die Erwärmung auf Temperaturen möglichst weit oberhalb des oberen Kühlpunktes sinnvoll ist, siehe Kurt Blank, Thermisch vorgespanntes Glas, Glastechnische Berichte 52 (1979), Teil 1: Seiten 1-13, Teil 2: Seiten 51-54. Um auch bei solchen hohen Temperaturen noch eine Handhabung des Glases zu erlauben, sollte die Viskosität des Glases nicht zu stark mit steigender Temperatur abfallen. Es werden daher sogenannte "lange" Gläser bevorzugt, bei denen der Verarbeitungspunkt möglichst weit oberhalb des oberen Kühlpunktes liegt. Dies ist bei Borosilicatgläsern i.a. der Fall und legt nahe, die nachfolgend formulierte Aufgabe der Erfindung auf die Familie der Borosilicatgläser einzuschränken.

## Aufgabe der Erfindung

Im Stand der Technik fehlt es an Borosilicatgläsern, die zu Brandschutz-Sicherheitsgläsern mit einer Scheibendicke von unter 6 mm verarbeitet werden können. Die Aufgabe der Erfindung ist, Gläser bereitzustellen, in denen die bei der Vorspannung durch das Material beeinflussbaren Parameter optimal dimensioniert sind. Konkret adressiert werden das Elastizitätsmodul, der obere Kühlpunkt, der Verarbeitungspunkt und der thermische Ausdehnungskoeffizient oberhalb des Glasübergangsbereiches, die im Hinblick auf die Vorspannung alle verhältnismäßig hoch gewählt werden sollten. Weiterhin sollte die Dichte im Hinblick auf das Gewicht der späteren Glasprodukte einen gewünschten Wert nicht überschreiten. Die Gläser sollten zudem in modernen Flachglasfloat- oder -ziehverfahren herstellbar sein.

Die Aufgabe wird durch die Gegenstände der Patentansprüche gelöst.

## Beschreibung der Erfindung

Die Aufgabe wird durch eine gezielte Kombination von stöchiometrischen Gläsern, also Gläsern, die in derselben Stöchiometrie auch als Kristalle existieren und deren Eigenschaft wegen der - wie in der Literatur an vielen Beispielen durch NMR-Messungen o.ä. überprüft - identischen Topologie der Baugruppen jeweils für Glas und Kristall als sehr ähnlich angenommen werden können, gelöst. Hierfür werden solche stöchiometrischen Gläser ausgewählt, deren Mischung ein Verhalten im Sinne einer Lösung der erfindungsgemäßen Aufgabe erzielbar macht. In dieser Anmeldung werden diese stöchiometrischen Gläser auch als "Grundgläser" bzw. "konstituierende Phasen" bezeichnet.

Es ist kein neues Konzept, Gläser anhand der ihnen zuzuordnenden konstituierenden Phasen zu beschreiben. Durch die Angabe der Grundgläser lassen sich Rückschlüsse auf die chemische Struktur eines Glases ziehen (vgl. Conradt R: "Chemical structure, medium range order, and crystalline reference state of multicomponent oxide liquids and glasses", in Journal of Non-Crystalline Solids, Volumes 345-346, 15 October 2004, Pages 16-23).

Die vorliegende Erfindung betrifft ein Glas mit einer Zusammensetzung, die durch die folgenden das Glas konstituierenden Phasen gekennzeichnet ist:

| konstituierende Phase | Min (Mol%) | Max (Mol%) |
|---|---|---|
| Reedmergnerit | 10 | 50 |
| Kalium-Reedmergnerit | 0 | 25 |
| Cordierit | 0 | 10 |
| Anorthit | 0 | 15 |
| Diopsid | 0 | 15 |
| Dibortrioxid | 0 | 10 |
| Siliziumdioxid | 10 | 60 |

wobei die Summe der Anteile von Anorthit und Diopsid in einem Bereich von 1 bis 30 Mol% liegt.

Ferner soll das erfindungsgemäße Glas bevorzugt weitere Bedingungen erfüllen, die mit der Zusammensetzung aus konstituierenden Phasen in formelmäßigen Zusammenhängen stehen, die weiter unten aufgezeigt werden.

Wir geben zunächst Umrechnungsmatrizen für die gegenseitige Umrechnung der Zusammensetzungsangaben in einfachen Oxiden und in konstituierenden Phasen an.

**Umrechnung von der Zusammensetzung aus konstituierenden Phasen in Zusammensetzung aus einfachen Oxiden und umgekehrt**

Die Zusammensetzung in konstituierenden Phasen wird zum Zweck der Umrechnung in der folgenden normierten Form angegeben:

**Tabelle 1**

| konstituierende Phase | Formel (auf ein einfaches Oxid normiert) |
|---|---|
| Reedmergnerit | $(Na_2O \cdot B_2O_3 \cdot 6SiO_2)/8$ |
| Kalium-Reedmergnerit | $(K_2O \cdot B_2O_3 \cdot 6SiO_2)/8$ |
| Cordierit | $(2MgO \cdot 2Al_2O_3 \cdot 5SiO_2)/9$ |
| Anorthit | $(CaO \cdot Al_2O_3 \cdot 2SiO_2)/4$ |
| Diopsid | $(CaO \cdot MgO \cdot 2SiO_2)/4$ |
| Dibortrioxid | $B_2O_3$ |
| Siliziumdioxid | $SiO_2$ |

Die Umrechnung dieser Zusammensetzungen in eine Zusammensetzungsangabe in Mol-% bezüglich der folgenden einfachen Oxide ...

| # | Oxid |
|---|---|
| 1. | $SiO_2$ |
| 2. | $B_2O_3$ |
| 3. | $Al_2O_3$ |
| 4. | $MgO$ |
| 5. | $CaO$ |
| 6. | $Na_2O$ |
| 7. | $K_2O$ |

.. erfolgt mit Hilfe der hier angegebenen Matrix. Dabei wird die Zusammensetzungsangabe in Mol-% hinsichtlich der Grundgläser als Spaltenvektor von rechts an die Matrix multipliziert:

**Matrix**

| 6/8 | 6/8 | 5/9 | 2/4 | 2/4 | 0 | 1 | x | $(Na_2O \cdot B_2O_3 \cdot 6SiO_2)/8$ |
|---|---|---|---|---|---|---|---|---|
| 1/8 | 1/8 | 0 | 0 | 0 | 1 | 0 | | $(K_2O \cdot B_2O_3 \cdot 6SiO_2)/8$ |
| 0 | 0 | 2/9 | 1/4 | 0 | 0 | 0 | | $(2MgO \cdot 2Al_2O_3 \cdot 5SiO_2)/9$ |
| 0 | 0 | 2/9 | 0 | 1/4 | 0 | 0 | | $(CaO \cdot Al_2O_3 \cdot 2SiO_2)/4$ |
| 0 | 0 | 0 | 1/4 | 1/4 | 0 | 0 | | $(CaO \cdot MgO \cdot 2SiO_2)/4$ |
| 1/8 | 0 | 0 | 0 | 0 | 0 | 0 | | $B_2O_3$ |
| 0 | 1/8 | 0 | 0 | 0 | 0 | 0 | | $SiO_2$ |

Als Ergebnis der Multiplikation des Spaltenvektors an die Matrix erhält man die Zusammensetzung des Glases in Molprozenten.

Umgekehrt lässt sich eine Zusammensetzung in Molprozenten einfach über die jeweilige inverse Matrix in eine Grundglaszusammensetzung überführen. Dabei gelten natürlich nur solche Grundglaszusammensetzungen als erfindungsgemäß, die bei Umrechnung keine negativen Werte für die Grundgläser ergeben.

**Bedeutung der konstituierenden Phasen und deren Auswahl im Hinblick auf die Aufgabe der Erfindung**

Die Zusammensetzung ist im Hinblick auf die das Glas konstituierenden Phasen innerhalb der hierin beschriebenen Grenzen gewählt. Die das Glas konstituierenden Phasen liegen als solche im Glasprodukt selbstverständlich nicht kristallin, sondern amorph vor. Das heißt aber nicht, dass die konstituierenden Phasen im amorphen Zustand völlig andere Baugruppen als im kristallinen Zustand haben. Wie oben gesagt, ist die Topologie der Baugruppen vergleichbar, also z.B. die Koordination der beteiligten Kationen mit umgebenden Sauerstoffatomen oder der sich aus der Koordination und der Stärke der Bindung zwischen diesen Kationen und umgebenden Sauerstoffatomen ergebende interatomare Abstand. Daher lassen sich viele Eigenschaften des Glases der Erfindung gut anhand der konstituierenden Phasen beschreiben, insbesondere um die erfinderische Leistung und die mit der Erfindung überwundenen Probleme darzustellen (vgl. dazu Conradt R., loc. cit.). Dabei kann das Glas natürlich nicht nur unter Verwendung der entsprechenden Kristalle hergestellt werden, sondern auch unter Verwendung der üblichen Glasrohstoffe, solange nur die stöchiometrischen Verhältnisse die Ausbildung der entsprechenden Baugruppen der Grundgläser ermöglichen.

Als konstituierende Phasen ausgewählt werden zunächst alkali- und erdalkalihaltige Tektosilicate, da diese im Hinblick auf ihre Struktur als "gestopfte Gerüste" ein hohes Elastizitätsmodul und auch eine hohe thermische Ausdehnung oberhalb des Glasübergangsbereiches erwarten lassen. Dies sind Reedmergnerit, das Kalium-Analogon des Reedmergnerit, Cordierit und Anorthit. Im Hinblick auf den geforderten niedrigen Ausdehnungskoeffizienten wird noch reines $SiO_2$ als konstituierende Phase beigegeben. Alle diese Phasen sind unterschiedlich "lang", d.h., sie haben als Gläser unterschiedlich große Abstände zwischen Verarbeitungspunkt und oberem Kühlpunkt, so dass sich der gewünschte Verlauf der Viskosität oberhalb des oberen Kühlpunktes durch eine Kombination dieser Phasen einstellen lässt. Um einen zusätzlichen Freiheitsgrad einzuführen, wird noch Diopsid als weitere Phase aufgenommen, das als Glas eher "kurz" ist, d.h. einen geringen Abstand zwischen Verarbeitungspunkt und oberem Kühlpunkt hat.

Alle diese Phasen haben als Gläser einen hohen oberen Kühlpunkt, was im Prinzip für die thermische Vorspannung erwünscht ist. Allerdings kann, wenn der obere Kühlpunkt zu hoch liegt, die Temperatur, zu der beim thermischen Vorspannen zunächst aufgeheizt wird, so hoch liegen, dass dies mit den technischen Randbedingungen einer Vorspannanlage nicht mehr kompatibel ist. Im Hinblick darauf wird noch reines $B_2O_3$ als konstituierende Phase beigegeben.

Im folgenden werden Berechnungsverfahren angegeben, wie sich die oben genannten Schlüsselgrößen Elastizitätsmodul, thermische Ausdehnung unterhalb und oberhalb des Glasübergangsbereiches, Verarbeitungspunkt und oberer Kühlpunkt sowie Dichte aus einer vorgegebenen Zusammensetzung aus konstituierenden Phasen berechnen lassen. Diese Berechnungsverfahren sind maßgeblich bei der Auswahl der Zusammensetzung eines erfindungsgemäßen Glases aus diesen konstituierenden Phasen.

**Thermischer Ausdehnungskoeffizient unterhalb des Glasübergangsbereiches**

Überraschenderweise lässt sich die Lage des thermischen Ausdehnungskoeffizienten im angestrebten Bereich mit Hilfe einer sehr einfachen Rechenvorschrift darstellen. Diese ergibt sich über die mittlere Bindungsstärke.

Aus der Literatur ist bekannt, dass der thermische Ausdehnungskoeffizient z.B. für Metalle umgekehrt proportional zur Bindungsenergie (oder zur "Tiefe der interatomaren Potentialtöpfe") ist, siehe z.B. H. Föll, Skript zur Vorlesung "Einführung in die Materialwissenschaft I", Christian Albrechts-Universität Kiel, S. 79 - 83.

In einem einfachen Bild oxidischer Gläser setzt man die Kationen in jeweils einen von den umgebenden Sauerstoffatomen gebildeten Potentialtopf und nimmt als dessen Tiefe die Summe der Bindungsstärken der verschiedenen Einfachbindungen zu den umgebenden Sauerstoffatomen an, konzentriert also die gesamte Wechselwirkungsenergie in Potentialtöpfe mit den Kationen im Zentrum und den Sauerstoffatomen in der Peripherie. Damit muss der umgekehrte Fall nicht mehr betrachtet werden; er wäre auch schwerer zu analysieren, da sich ein Sauerstoffatom zwischen mehreren verschiedenartigen Kationen befinden kann, was umgekehrt in rein oxidischen Gläsern nicht vorkommen kann. Diese Werte sind tabelliert, z.B. in DE 10 2014 119 594 A1:

**Tabelle 2**

| Kation | Potentialtopftiefe / (kJ/mol) |
|--------|-------------------------------|
| Si     | 1864                          |

(fortgesetzt)

| Kation | Potentialtopftiefe / (kJ/mol) |
|--------|-------------------------------|
| B | 1572,5 |
| Al | 1537 |
| Mg | 999 |
| Ca | 1063 |
| Na | 440,5 |
| K | 395 |

Aus der Zusammensetzung eines Glases aus den oben angegebenen konstituierenden Phasen, den in den jeweiligen Phasen enthaltenen Anzahlen verschiedener Kationen und der oben tabellierten Potentialtopftiefen pro Kation lässt sich eine mittlere Potentialtopftiefe errechnen:

$$\overline{E_{pot}} = \frac{\sum_{i=1}^{n} c_i \cdot \sum_{j=1}^{m} z_{i,j} \cdot E_{pot,j}}{\sum_{i=1}^{n} c_i \cdot \sum_{j=1}^{m} z_{i,j}} \qquad (3)$$

Dabei ist m die Zahl der auftretenden Kationentypen, $E_{pot,j}$ die oben tabellierte Potentialtopftiefe für den j-ten Kationentyp und $z_{j,i}$ die Anzahl der Kationen des j-ten Typs in der i-ten konstituierenden Phase. Die Summen über j sind im Folgenden tabelliert:

**Tabelle 3 "z-Summen" und "z-$E_{pot}$-Summen" nach Pauling**

| konstituierende Phase | Formel (auf ein einfaches Oxid normiert) | $\sum_{j=1}^{m} z_{i,j}$ ("z-Summe") | $\sum_{j=1}^{m} z_{i,j} \cdot E_{pot,j}$ / (kJ/mol) ("z-$E_{pot}$-Summe") |
|---|---|---|---|
| Reedmergnerit | $(Na_2O \cdot B_2O_3 \cdot 6SiO_2)/8$ | 1,25 | 1901,25 |
| Kalium-Reedmergnerit | $(K_2O \cdot B_2O_3 \cdot 6SiO_2)/8$ | 1,25 | 1889,875 |
| Cordierit | $(2MgO \cdot 2Al_2O_3 \cdot 5SiO_2)/9$ | 1,222 | 1940,666667 |
| Anorthit | $(CaO \cdot Al_2O_3 \cdot 2SiO_2)/4$ | 1,25 | 1966,25 |
| Diopsid | $(MgO \cdot CaO \cdot 2SiO_2)/4$ | 1 | 1447,5 |
| Boroxid | $B_2O_3$ | 2 | 3145 |
| Siliziumdioxid | $SiO_2$ | 1 | 1864,00 |

Diese mittlere Bindungsstärke hängt, wie z.B. auch bei Metallen, siehe H. Föll, loc. cit., umgekehrt proportional mit dem thermischen Ausdehnungskoeffizienten zusammen. Eine Auswertung einer Reihe silicatischer Gläser unterschiedlichen Typs (Kalk-Natron-Gläser, Borosilicatgläser, Aluminosilicatgläser) führt zu folgender Formel:

$$CTE_{Glas} = \left( \frac{50116.33042 \left( \frac{kJ}{Mol} \right)}{\overline{E_{pot}}} - 26.1724514 \right) ppm/K \qquad (4)$$

Damit läßt sich der $CTE_{Glas}$ im Mittel auf 0,3ppm/K genau vorhersagen.

Im Hinblick auf die thermische Vorspannbarkeit beträgt der nach Formel (4) berechnete $CTE_{Glas}$ bevorzugt mindestens 3,8 ppm/K, weiter bevorzugt mindestens 3,9 ppm/K, weiter bevorzugt mindestens 4 ppm/K, weiter bevorzugt mindestens 4,1 ppm/K. Im Hinblick auf die Verwendung als Brandschutzglas sollte der berechnete $CTE_{Glas}$ bevorzugt 4,8 ppm/K, weiter bevorzugt 4,7 ppm/K, 4,6 ppm/K oder 4,5 ppm/K nicht übersteigen. Bevorzugt liegt der nach Formel (4) berechnete $CTE_{Glas}$ in einem Bereich von 3,8 bis 4,8 ppm/K, weiter bevorzugt von 3,9 bis 4,7 ppm/K, weiter bevorzugt von 4,0 bis 4,6 ppm/K, weiter bevorzugt von 4,1 bis 4,5 ppm/K.

**Dichte, Molvolumen und Packungsdichte**

Bemerkenswerterweise lässt sich die Dichte $\rho$ sehr einfach per Hebelregel aus den Molmassen $M_i$ und Dichten $\rho_i$ der konstituierenden Phasen berechnen:

$$\rho = \frac{\sum_{i=1}^{n} c_i \cdot M_i}{\sum_{i=1}^{n} c_i \cdot \frac{M_i}{\rho_i}} \qquad (5)$$

Der Zähler von (5) ist dabei die Molmasse, der Nenner das Molvolumen $V_{mol}$ des Glases. Damit läßt sich die Dichte für die hier adressierten Glassysteme im Mittel auf 1% genau vorhersagen.

Die Dichtewerte finden sich in O.V. Mazurin, M.V. Streltsina, T.P. Shvaiko-Shvaikovskaya, Handbook of Glass Data A-C, Elsevier, Amsterdam, 1983-1987.

Aus dem Molvolumen berechnen wir als Zwischengröße für weitere Rechnungen noch die Packungsdichte $\chi$ des Glases. Dazu berechnen wir für jede konstituierende Phase zunächst das (molare) Ionenvolumen. Darunter verstehen wir das Volumen, das die zu einem Mol der konstituierenden Phase (genau: ein Mol der auf ein einfaches Oxid normierten konstituierenden Phase) einnehmen, wenn man sie als kugelförmige Ionen mit dem von Robert Shannon so genannten "Crystal Radius" auffasst, siehe Robert D. Shannon, Revised Effective Ionic Radii and Systematic Studies of Interatomic Distances in Halides and Chalcogenides, Acta Cryst. A32 (1976), S. 751-767. Diese Radien unterscheiden sich je nach Koordinationszahl. Für die Kationen sind die dazu notwendigen Koordinationszahlen der unten bei der Diskussion der konstituierenden Phasen gelisteten mineralogischen Literatur entnommen worden; nach Conradt R., loc. cit., gehen wir davon aus, dass die Koordinationszahlen der Kationen im Glas gleich denen der entsprechenden Kristallphasen sind. Die Sauerstoffatome werden entsprechend der Wertigkeit den Kationen zugeordnet, sprich auf ein Natriumion entfällt ein halbes Sauerstoffion usw. Für das einzelne Sauerstoffion wird dann angenommen, dass es passend zu dieser Zuordnung koordiniert ist, d.h. ein einem Siliziumion zugeordnetes Sauerstoffion ist zweifach koordiniert usw. Liegen für einzelne Koordinationszahlen keine expliziten Radiuswerte in der Tabelle von Robert D. Shannon, loc. cit., vor, wird inter- bzw. extrapoliert.

Die sich daraus ergebenden molaren Ionenvolumina sind zusammen mit den Molmassen und Dichtewerten im folgenden tabelliert.

**Tabelle 4 Molmassen, Dichten und molare Ionenvolumina der normierten konstituierenden Phasen**

| konstituierende Phase | Formel (auf ein einfaches Oxid normiert) | $M_i$/g | $\rho_i$/ (g/cm³) | Ionenvolumen $V_{ion,i}$ / cm³ |
|---|---|---|---|---|
| Reedmergnerit | $(Na_2O \cdot B_2O_3 \cdot 6SiO_2)/8$ | 61.513 | 2.445 | 10.18044415 |
| Kalium-Reedmergnerit | $(K_2O \cdot B_2O_3 \cdot 6SiO_2)/8$ | 65.540 | 2.417 | 12.17972854 |
| Cordierit | $(2MgO \cdot 2Al_2O_3 \cdot 5SiO_2)/9$ | 64.994 | 2.635 | 9.754984882 |
| Anorthit | $(CaO \cdot Al_2O_3 \cdot 2SiO_2)/4$ | 69.552 | 2.694 | 10.55580119 |
| Diopsid | $(MgO \cdot CaO \cdot 2SiO_2)/4$ | 54.137 | 2.847 | 8.797510051 |
| Boroxid | $B_2O_3$ | 69.619 | 1.82 | 13.4254877 |
| Siliziumdioxid | $SiO_2$ | 60.084 | 2.203 | 9.100438178 |

Die Packungsdichte ergibt sich damit zu:

$$\chi = \frac{\sum_{i=1}^{n} c_i \cdot V_{ion,i}}{\sum_{i=1}^{n} c_i \cdot \frac{M_i}{\rho_i}} \qquad (6)$$

Im Hinblick auf das Gewicht sollte die Dichte bevorzugt maximal 2,45 g/cm³ betragen, weiter bevorzugt maximal 2,4 g/cm³, weiter bevorzugt maximal 2,35 g/cm³. Bevorzugt liegt die nach Formel (5) berechnete Dichte in einem Bereich von 2,25 bis 2,45 g/cm³, weiter bevorzugt von 2,3 bis 2,4 g/cm³, weiter bevorzugt von 2,31 bis 2,39 g/cm³. Die nach Formel (5) berechnete Dichte kann beispielsweise mindestens 2,25 g/cm³, mindestens 2,3 g/cm³ oder mindestens 2,31

g/cm$^3$ betragen. Die nach Formel (5) berechnete Dichte kann beispielsweise höchstens 2,45 g/cm$^3$, höchstens 2,4 g/cm$^3$, höchstens 2,39 g/cm$^3$ oder höchstens 2,35 g/cm$^3$ betragen. Grenzen für die Packungsdichte ergeben sich indirekt durch die Grenzen für den daraus berechneten Wert für CTE$_{liquid}$, s.u.

**Elastizitätsmodul**

Ausgangspunkt für die Berechnung des Elastizitätsmoduls ist die Theorie von Makishima und Mackenzie, siehe "Direct calculation of Young's modulus of glass", "Calculation of bulk modulus, shear modulus and Poisson's ratio of glass", J. Non-Crystall. Sol., 1973 und 1975. Nach dieser Theorie läßt sich das Elastizitätsmodul darstellen durch:

$$E \propto \chi \cdot \sum_{i=1}^{n} e_{Diss.,i} \cdot c_i \qquad (7)$$

Dabei ist $e_{diss.,i}$ die Dissoziationsenergiedichte der i-ten Komponente (Dimension z.B. kJ/cm$^3$) und $c_i$ deren molarer Anteil. $\chi$ ist die Packungsdichte.
Für die weiteren Rechnungen schreiben wir das um in:

$$E \propto \chi \cdot \frac{1}{V_{mol}} \cdot \sum_{i=1}^{n} E_{Diss.,i} \cdot c_i \qquad (8)$$

Unter Dissoziationsenergie verstehen Makishima und Mackenzie dasselbe wie die o.a. Bindungsstärke. Letztere haben wir oben den Kationen zugeordnet, so dass wir, wenn wir uns bei den Komponenten auf einfache Oxide beziehen, die gemittelte molare Dissoziationsenergie mit der o.a. mittleren Potentialtopftiefe eines Kations, multipliziert mit der Zahl z der Kationen pro Mol, identifizieren können:

$$\sum_{i=1}^{n} E_{Diss.,i} \cdot c_i = \sum_{i=1}^{n} c_i \cdot z_i \cdot E_{pot,i} = \overline{E_{pot}} \cdot \sum_{i=1}^{n} c_i \cdot z_i = \overline{E_{pot}} \cdot z \qquad (9)$$

Damit ergibt sich:

$$E \propto \chi \cdot \frac{\overline{E_{pot}} \cdot z}{V_{mol}} \qquad (10)$$

Mit der o.a. Theorie erhält man sehr gute Ergebnisse für Gläser, in denen keine Boroxolringe vorkommen; die von Makishima und Mackenzie vorgenommene adhoc-Erweiterung für Borate ist unbefriedigend.
Eine neue Theorie von Plucinski und Zwanziger ("Topological constraints and the Makishima-Mackenzie model", J. Non-Crystall. Sol., 2015), ergänzt den Ausdruck Kennzeichen um einen topologischen Vorfaktor, ist aber in der publizierten Form nur für rein kovalent gebundene Gläser (Chalkogenide) geeignet.
Vorliegend wird daher ein modifizierter topologischer Vorfaktor definiert.
Wesen topologischer Betrachtungen ist, wie beispielsweise in DE 10 2014 119 594 A1 ausführlich dargelegt, die den Atomen durch die Bindung zu den Nachbaratomen auferlegten Zwangsbedingungen abzuzählen. Diese Zwangsbedingungen betreffen zum einen Teil den interatomaren Abstand ("Abstandsbedingungen"), zum anderen die Bindungswinkel ("Winkelbedingungen"). Hat ein Atom r Nachbarn (r = Koordinationszahl), so folgen aus den r Abstandsbedingungen zu diesen Nachbarn r/2 diesem Atom zuzuordnende Abstandsbedingungen, wenn man die Abstandsbedingungen gleich unter beiden Bindungspartnern verteilt. Aus den Bindungswinkeln zwischen diesen Nachbarn, mit dem betrachteten Atom an der Spitze des jeweiligen Winkels, folgen weitere 2r-3 Winkelbedingungen, die diesem Atom zuzuordnen sind.
In DE 10 2014 119 594 A1 ist ein Verfahren beschrieben, das bei der Berechnung der Abstands- und Winkelbedingungen eine Wichtung aller Bedingungen mit der Einzelbindungsstärke und noch einmal eine zusätzliche Wichtung der Winkelbedingungen (nur die von den Sauerstoff-Kation-Sauerstoff-Winkeln herrührenden; die zu den Kation-Sauerstoff-Kation-Winkeln gehörenden Bedingungen werden vernachlässigt) mit dem Kovalenzgrad der jeweiligen Bindung vorsieht. Dabei sind die Wichtungsfaktoren normiert, indem jeweils durch die Einzelbindungsstärke bzw. den Kovalenzgrad der Silizium-Sauerstoffbindung geteilt wird, so dass sich für Quarzglas eine Zahl von (gerundet) 1,333333333 (d.h. 4/3) Abstandsbedingungen und (gerundet) 1,666666667 (d.h. 5/3) Winkelbedingungen pro Atom ergibt. Das entspricht, wie in DE 10 2014 119 594 A1 dargelegt, der direkten Analyse der Topologie von Quarzglas, wenn man alle Abstands- und Winkelbedingungen einfach zählt und die Winkelbedingungen der Silizium-Sauerstoff-Silizium-Winkel vernachlässigt.

Damit hat Quarzglas eine Zahl von "3" Zwangsbedingungen pro Atom, was genau der Zahl der Freiheitsgrade pro Atom entspricht. Quarzglas sollte also keine (oder realiter: eine sehr geringe) Zahl von Konfigurationsfreiheitsgraden pro Atom haben, was dem geringen $c_p$-Sprung von Quarzglas beim differenzkalorimetrisch gemessenen Glasübergang entspricht, siehe R. Brüning, "On the glass transition in vitreous silica by differential thermal analysis measurements", Journal of Non-Crystalline Solids 330 (2003) 13-22.

Für andere oxidische Gläser ergeben sich im Allgemeinen niedrigere Werte für die Zahlen der Abstands- und Winkelbedingungen pro Atom als (gerundet) 1,333333333 (4/3) bzw. 1,666666667 (5/3). Bei den Winkelbedingungen kann man noch unterscheiden, ob die zugehörigen Winkelbedingungen sich auf Winkel beziehen, die alle in einer Ebene liegen (trigonale Koordination) oder nicht (tetraedrische oder höhere Koordination). Letztere werden hier als 3D-Winkelbedingungen bezeichnet.

Entsprechend werden "4/3 minus Abstandsbedingungenzahl" als Abstandsfreiheitsgradezahl, "5/3 minus Winkelbedingungszahl als Winkelfreiheitsgradezahl" und "5/3 minus 3D-Winkelbedingungenzahl" als 3DWinkelfreiheitsgradezahl bezeichnet, jeweils pro Atom (kurz: "p.A.").

Weiterhin greift folgende Überlegung. Der Modellansatz von Makishima-Mackenzie summiert und mittelt über isotrope Wechselwirkungen. Im Bereich der Boroxolringe ist die Wechselwirkung aber nicht isotrop, sondern es ist in der Ebene der Boroxolringe ein "kraftloses" Gleiten möglich.

Um dem Rechnung zu tragen, wird berücksichtigt, dass der Elastizitätsmodul E aus einem Scher- und einem Kompressions-/Dilatationsanteil zusammengesetzt ist. Dies wird durch die folgenden Gleichungen ausgedrückt, siehe z.B. H. Föll, Skript zur Vorlesung "Einführung in die Materialwissenschaft I", Christian Albrechts-Universität Kiel, S. 79 - 83:

$$\frac{1}{E} = \frac{1}{3G} + \frac{1}{9K} \qquad (11a)$$

$$G = \frac{E}{2(1+\mu)} \qquad (11b)$$

$$K = \frac{E}{3(1-2\mu)} \qquad (11c)$$

$$K = G\frac{2(1+\mu)}{3(1-2\mu)} \qquad (11d)$$

Dabei ist G der Schermodul, K der Kompressionsmodul und $\mu$ die Poissonzahl. E kann nach (11) wahlweise aus einem der Größenpaare G und K, G und $\mu$ sowie K und $\mu$ berechnet werden.

Die Theorie von Makashima und Mackenzie wird jetzt dahingehend modifiziert, dass die o.a. Proportionalität zwischen Modul und Dissoziationsenergiedichte nicht für den Elastizitätsmodul E, sondern für den Schermodul G angesetzt wird:

$$G \propto \frac{\overline{E_{pot} \cdot z}}{V_{mol}} \qquad (12)$$

Für den Schermodul wird an dieser Stelle keine weitere Proportionalität zur Packungsdichte angesetzt; die wie bei Makashima und Mackenzie auch hier gegebene Beziehung zur Packungsdichte wird weiter unten eingeführt.

Dass das Vorhandensein der Boroxolringe wegen der o.a. Gleitebenen zu einer Verkleinerung des Schermoduls führt, wird durch einen Vorfaktor f berücksichtigt, der als Verhältnis zwischen Zahlen definiert ist. Die erste Zahl ist die um (2/3) der Differenz von 3D-Winkelfreiheitsgradezahl p.A. und Winkelfreiheitsgradezahl p.A. verminderte Winkelbedingungenzahl p.A. Die zweite Zahl ist die Winkelbedingungenbedingungenzahl p.A. Wenn keine Boroxolringe vorliegen, ist dieser Vorfaktor Eins; wenn Boroxolringe vorliegen, ist dieser Vorfaktor kleiner als Eins.

$$G \propto f \cdot \frac{\overline{E_{pot} \cdot z}}{V_{mol}} \quad ,$$

$$f = \frac{Winkelbedingungenzahl\ p.A. - (\frac{2}{3})(3D Winkelfreiheitsgradezahl\ p.A. - Winkelfreiheitsgradezahl\ p.A.)}{Winkelbedingungenzahl\ p.A.} \qquad (13)$$

Die Zahl (2/3) ergibt sich aus folgender Überlegung, betreffend eine Scherung. Es wird angenommen, dass die Boroxolringe so verteilt gelagert sind, dass (1/3) in einer Ebene senkrecht zur Scherachse liegen und (2/3) in einer Ebene, die die Scherachse einschließt. Nur die beiden letztgenannten tragen zu einer Senkung des Schermoduls bei. Dementsprechend werden auch nur (2/3) derjenigen Winkelfreiheitsgrade gezählt, die sich zusätzlich ergeben, wenn man nicht alle Winkelbedingungen, sondern nur die 3D-Winkelbedingungen zählt.

Im Gegensatz zum Schermodul ist beim Kompressionsmodul keine erhebliche Veränderung durch das Vorhandensein der Gleitebenen zu erwarten. Aus Konsistenzgründen hat das eine Konsequenz für die Poissonzahl $\mu$. Dazu wird (11d) betrachtet. Wenn G sich durch die Einführung von Gleitebenen ändert und K sich dabei wegen ansonsten unveränderter Verhältnisse nicht ändern soll, kann und muss das durch eine Änderung $\Delta\mu_f$ von $\mu$ kompensiert werden. Um diese Änderung in erster Näherung zu quantifizieren, wird K in erster Ordnung nach f und $\mu$ entwickelt; es wird dann noch gefordert, dass $\Delta K = 0$ gilt:

$$\Delta K = \frac{2(1+\mu)}{3(1-2\mu)}\frac{\partial G}{\partial f}\Delta f + G\left(\partial\frac{2(1+\mu)}{3(1-2\mu)}\Big/\partial\mu\right)\Delta\mu = \frac{2(1+\mu)}{3(1-2\mu)}\frac{G}{f}\Delta f + G\left(\frac{2}{(1-2\mu)^2}\right)\Delta\mu_f \stackrel{!}{=} 0 \qquad (14)$$

Daraus folgt:

$$\Delta\mu_f = -\left[\frac{(1+\mu)(1-2\mu)}{3}\frac{1}{f}\right]\Delta f \qquad (15)$$

Da die erfindungsgemäßen Gläser silicatische Gläser sind, wird als Aufpunkt für die Entwicklung Quarzglas gewählt. Für Quarzglas gelten $\mu = 0{,}17$ und $f = 1$, dementsprechend werden diese Werte in den eckige-Klammern-Ausdruck eingesetzt. Dieser Ausdruck nimmt damit den Wert 0,2574 an. Um $\Delta\mu_f$ für ein anderes silicatisches Glas zu erhalten, wird -0,2574 mit $\Delta f = f\text{-}1$ multipliziert; dabei ist f der sich aus (13) für dieses andere Glas ergebende Wert.

Es ist beim Wechsel von Quarzglas auf ein anderes silicatisches Glas bezüglich $\mu$ noch ein anderer Umstand zu berücksichtigen. Andere silicatische Gläser haben ähnliche, aber unterschiedliche Packungsdichten, und es gilt eine positive Korrelation zwischen $\mu$ und der Packungsdichte, siehe Greaves, G., Greer, A., Lakes, R., Rouxel, T, Poisson's ratio and modern materials, Nature Mater 10, 823-837 (2011). Dies wird durch einen zweiten $\Delta\mu$-Term berücksichtigt, der $\Delta\mu_\chi$ genannt wird. Für die erfindungsgemäßen Gläser kann dieser als linear angenommen werden, so dass gilt:

$$\frac{\Delta\mu_\chi}{\mu} = \frac{\Delta\chi}{\chi} \qquad (16)$$

Als Aufpunkt wird wieder Quarzglas genommen, für das $\chi = 0{,}33367062$ gilt. $\Delta\chi$ wird dann aus dem nach (6) zu berechnenden Wert für $\chi$ und 0,33367062 gemäß $\Delta\chi = \chi - 0{,}33367062$ bestimmt. Im Nenner links wird $\mu = 0{,}17$ und im Nenner rechts $\chi = 0{,}33367062$ gesetzt. Damit berechnen wir $\mu$ für ein erfindungsgemäßes Glas nach:

$$\mu = 0{,}17 + \Delta\mu_f + \Delta\mu_\chi \qquad (17)$$

Der Ansatz für E lautet damit und mit (11b):

$$E = a \cdot 2 \cdot (1+\mu) \cdot f \cdot \frac{\overline{E_{pot} \cdot z}}{V_{mol}} + b \qquad (18)$$

"a" und "b" sind einstellbare Parameter. Die Auswertung einer Reihe verschiedener silicatischer Gläser unterschiedlichen Typs (Kalk-Natron-Gläser, Borosilicatgläser, Aluminosilicatgläser) führt zu folgender Formel:

$$E = \left(0.683888667\left(2 \cdot (1 + \mu) \cdot f \cdot \overline{\frac{E_{pot} \cdot z}{V_{mol}}}\right) - 39.4242404\right) GPa \qquad (19)$$

Dabei sind $E_{pot}$ in kJ/Mol, z dimensionslos (Mol Kationen pro Mol Glas) und $V_{mol}$ in cm³ einzusetzen. $E_{pot}$ ist jeweils nach Formel (3) und Tabelle (3) zu bestimmen. $V_{mol}$ ist der Nenner in Gleichung (6). f wird aus den Winkelbedingungen nach Formel (13) und Tabelle (5) bestimmt. $\Delta \mu$ folgt nach Gleichung (17) aus $\Delta\mu_f$ und $\Delta\mu_\chi$. $\Delta\mu_f$ folgt nach Gleichung (15) aus f. $\Delta\mu_\chi$ wird mit Gleichung (16) bestimmt; notwendiger Input ist die Packungsdichte $\chi$, die ihrerseits nach Gleichung (6) bestimmt wird. Man erhält so einen mittleren Fehler von 2,5 GPa bei der Berechnung von E.

Da die erfindungsgemäßen Gläser eine Kombination der oben angegebenen konstituierenden Phasen aufweisen, ist es für die Berechnung der Zahl der Abstands-, Winkel- und 3D-Winkelbedingungen pro Atom zweckmäßig, diese zunächst für jede konstituierende Phase numerisch anzugeben.

Die folgenden Zahlenwerte sind zunächst nach dem in DE 10 2014 119 594 A1 angegebenen Verfahren berechnet worden, wobei hier die Zahl der Winkelbedingungen für alle Kationen berechnet worden ist und zwar so wie in DE 10 2014 119 594 A1 (aber dort nur für Bor und Aluminium); außerdem ist der Ionisationsgrad einer Kation-Sauerstoff-Verbindung nicht nach der Formel (8) aus der DE 10 2014 119 594 A1, sondern nach der Formel (3) aus Alberto Garcia, Marvon Cohen, First Principles Ionicity Scales, Phys. Rev. B 1993 berechnet worden. Die dazu notwendigen Koordinationszahlen sind der unten bei der Diskussion der konstituierenden Phasen gelisteten mineralogischen Literatur entnommen worden; nach Conradt R., loc. cit., gehen wir davon aus, dass die Koordinationszahlen der Kationen im Glas gleich denen der entsprechenden Kristallphasen sind.

Es gilt:

**Tabelle 5 Zahl der Abstandsbedingungen etc.**

| konstituierende Phase + Formel (auf ein einfaches Oxid normiert) | Atome / Baueinheit | Abstandsbedingungen / Atom $b_{A,i}$ | Winkel bedingungen / Atom $b_{W,i}$ | 3D-Winkelbedingungen / Atom $b_{3DW,i}$ |
|---|---|---|---|---|
| Reedmergnerit (Na$_2$O· B$_2$O$_3$·6SiO$_2$)/8 | 3,25 | 1.255364807 | 1.431196438 | 1.431196438 |
| Kalium-Reedmergnerit (K$_2$O· B$_2$O$_3$·6SiO$_2$)/8 | 3,25 | 1.247854077 | 1.427878942 | 1.427878942 |
| Cordierit (2MgO·2Al$_2$O$_3$·5SiO$_2$)/9 | 3,2222 | 1.292437472 | 1.239141194 | 1.239141194 |
| Anorthit (CaO·Al$_2$O$_3$·2SiO$_2$) /4 | 3,25 | 1.298283262 | 1.174000738 | 1.174000738 |
| Diopsid (MgO·CaO·2SiO$_2$)/ 4 | 2,5 | 1.24248927 | 1.100228274 | 1.100228274 |
| Boroxid B$_2$O$_3$ | 5 | 1.349785408 | 1.496075913 | 0 |
| Siliziumdioxid SiO$_2$ | 3 | 1.333333333 | 1.666666667 | 1.666666667 |

Die Rechenvorschrift zur Bestimmung der Winkelbedingungen bw pro Atom am fertigen Glas lautet damit:

$$b_W = \frac{\sum_{i=1}^{n} c_i \cdot y_i \cdot b_{W,i}}{\sum_{i=1}^{n} c_i \cdot y_i} \qquad (20)$$

wobei $c_i$ der molare Anteil der i-ten konstituierenden Phase in der betrachteten Glaszusammensetzung ist, $y_i$ die Zahl der Atome pro Baueinheit in der i-ten konstituierenden Phase und $b_{w,i}$ die Zahl der Winkelbedingungen pro Atom in der i-ten konstituierenden Phase. "n" ist die Zahl der konstituierenden Phasen.

Analog lautet die Rechenvorschrift zur Bestimmung der 3D-Winkelbedingungen $b_{3D-W}$ pro Atom am fertigen Glas:

$$b_{3D-W} = \frac{\sum_{i=1}^{n} c_i \cdot y_i \cdot b_{3D-W,i}}{\sum_{i=1}^{n} c_i \cdot y_i} \qquad (21)$$

wobei $b_{3D-W,i}$ die Zahl der 3D-Winkelbedingungen pro Atom in der i-ten konstituierenden Phase ist.

Analog lautet die Rechenvorschrift zur Bestimmung der Abstandsbedingungen $b_A$ pro Atom am fertigen Glas:

$$b_A = \frac{\sum_{i=1}^{n} c_i \cdot y_i \cdot b_{A,i}}{\sum_{i=1}^{n} c_i \cdot y_i} \qquad (22)$$

wobei $b_{A,i}$ die Zahl der Abstandsbedingungen pro Atom in der i-ten konstituierenden Phase ist.

Im Hinblick auf die thermische Vorspannbarkeit sollte der nach Formel (19) berechnete Elastizitätsmodul bevorzugt mindestens 71GPa, bevorzugt mindestens 72GPa, besonders bevorzugt mindestens 73GPa, ganz besonders bevorzugt mindestens 74GPa, demgegenüber noch weiter bevorzugt mindestens 75GPa. Bevorzugt liegt der nach Formel (19) berechnete Elastizitätsmodul in einem Bereich von 71 bis 79 GPa, weiter bevorzugt von 72 bis 78 GPa, weiter bevorzugt von 73 bis 77 GPa, weiter bevorzugt von 74 bis 76 GPa. Der nach Formel (19) berechnete Elastizitätsmodul kann beispielsweise höchstens 79 GPa, höchstens 78 GPa, höchstens 77 GPa oder höchstens 76 GPa betragen.

## Thermische Ausdehnung im Glaszustand ($CTE_{liquid}$)

Der $CTE_{liquid}$, der zusätzlich zu der durch den $CTE_{Glas}$ beschriebenen gewöhnlichen thermischen Ausdehnungskoeffizienten noch strukturelle Umkonfigurationseffekte umfasst, siehe F. Mauch, J. Jäckle, loc. cit., wird erstens als proportional zur Packungsdichte und zweitens als proportional zum Elastizitätsmodul angenommen. Je größer erstens die Packungsdichte ist, desto weniger Platz für eine Umkonfiguration steht inwendig zur Verfügung und desto mehr muss das System nach außen raumfordernd ausweichen, wenn eine Umkonfiguration ansteht. Je größer zweitens das Elastizitätsmodul ist, desto steifer widersetzt sich die Struktur einer Umkonfigurations und desto mehr muss wiederum das System nach außen raumfordernd ausweichen, wenn eine Umkonfiguration ansteht.

Wir gehen auf die Formeln (6), (18) zurück und setzen für $CTE_{liquid}$ an:

$$CTE_{liquid} = a \cdot 2 \cdot (1 + \mu) \cdot f \cdot \frac{\overline{E_{pot} \cdot z}}{V_{mol}} \cdot \chi + b \qquad (23)$$

$\chi$ etc. werden wie oben dargelegt bestimmt. "a" und "b" sind einstellbare Parameter. Die Auswertung einer Reihe verschiedener silicatischer Gläser unterschiedlichen Typs (Kalk-Natron-Gläser, Borosilicatgläser, Aluminosilicatgläser) führt zu folgender Formel:

$$CTE_{liquid} = \left( 1.619132314 \cdot 2 \cdot (1 + \mu) \cdot f \cdot \frac{\overline{E_{pot} \cdot z}}{V_{mol}} \cdot \chi - 76.32305514 \right) \cdot \frac{ppm}{K} \qquad (24)$$

Man erhält so einen mittleren Fehler von 2,3ppm/K bei der Berechnung von $CTE_{liquid}$.

Im Hinblick auf die thermische Vorspannbarkeit sollte der nach Formel (24) berechnete Wert für $CTE_{liquid}$ bevorzugt mindestens 22ppm/K, weiter bevorzugt mindestens 22,5ppm/K, besonders bevorzugt mindestens 23ppm/K, ganz besonders bevorzugt mindestens 23,5ppm/K, demgegenüber noch weiter bevorzugt mindestens 24ppm/K, beispielsweise mindestens 24,5 ppm/K, mindestens 25 ppm/K, mindestens 25,5 ppm/K oder mindestens 26 ppm/K. Bevorzugt liegt der nach Formel (24) berechnete Wert für $CTE_{liquid}$ in einem Bereich von 21 bis 33 ppm/K, weiter bevorzugt von 21,5 bis 32,5 ppm/K, weiter bevorzugt von 22 bis 32 ppm/K, weiter bevorzugt von 22,5 bis 31,5 ppm/K, weiter bevorzugt von 23 bis 31 ppm/K, weiter bevorzugt von 23,5 bis 30,5 ppm/K, weiter bevorzugt von 24 bis 30 ppm/K, weiter bevorzugt von 24,5 bis 291,5 ppm/K, weiter bevorzugt von 25 bis 29 ppm/K, weiter bevorzugt von 25,5 bis 28,5 ppm/K, weiter bevorzugt von 26 bis 28 ppm/K. Der nach Formel (24) berechnete Wert für $CTE_{liquid}$ kann beispielsweise höchstens 33 ppm/K, höchstens 32.5 ppm/K, höchstens 32 ppm/K, höchstens 31.5 ppm/K, höchstens 31 ppm/K, höchstens 30.5 ppm/K, höchstens 30 ppm/K, höchstens 29.5 ppm/K, höchstens 29 ppm/K, höchstens 28.5 ppm/K oder höchstens 28 ppm/K betragen.

**Verarbeitungspunkt**

Der Verarbeitungspunkt VA, bei dem die Viskosität $10^4$ dPa·s beträgt, lässt sich ähnlich wie die thermische Ausdehnung über die mittlere Bindungsstärke berechnen. Aus der Literatur ist bekannt, dass der Schmelzpunkt z.B. für Metalle umgekehrt proportional zur Bindungsenergie (oder zur "Tiefe der interatomaren Potentialtöpfe") ist, siehe z.B. H. Föll, Skript zur Vorlesung "Einführung in die Materialwissenschaft I", Christian Albrechts-Universität Kiel, S. 79 - 83; der Schmelzpunkt wird hier *cum grano salis* mit der Verarbeitungstemperatur identifiziert.

Man macht also den Ansatz VA = a·$E_{pot}$+ b. Die Auswertung einer Reihe verschiedener silicatischer Gläser unterschiedlichen Typs (Kalk-Natron-Gläser, Borosilicatgläser, Aluminosilicatgläser) führt zu folgender Formel:

$$VA = 0.989573825 \cdot \overline{E_{pot}} \cdot \frac{°C}{kJ/mol} - 387.9923613°C \qquad (25)$$

Man erhält so einen mittleren Fehler von 28K bei der Berechnung von VA.

Im Hinblick auf den gewünschten flachen Verlauf der Viskositätskurve sollte der nach Formel (25) berechnete VA bevorzugt mindestens 1200°C, weiter bevorzugt mindestens 1210°C, besonders bevorzugt mindestens 1220°C, ganz besonders bevorzugt mindestens 1230°C, am meisten bevorzugt mindestens 1240°C betragen. Im Hinblick auf die Prozesstauglichkeit wiederum sollte der nach Formel (25) berechnete VA bevorzugt maximal 1300°C betragen, beispielsweise höchstens 1290°C, höchstens 1280°C, höchstens 1270°C oder höchstens 1260°C. Bevorzugt liegt der nach Formel (25) berechnete Verarbeitungspunkt VA in einem Bereich von 1200°C bis 1300°C, weiter bevorzugt von 1210°C bis 1290°C, weiter bevorzugt von 1220°C bis 1280°C, weiter bevorzugt von 1230°C bis 1270°C, weiter bevorzugt von 1240°C bis 1260°C.

**Differenz von Verarbeitungspunkt und oberem Kühlpunkt, oberer Kühlpunkt**

Im Hinblick auf die oben erwähnte Bedeutung der "Kürze" bzw. "Länge" eines Glases, also einem steilen bzw. flachen Verlauf der Viskositätskurve oberhalb des oberen Kühlpunktes, ist die Differenz zwischen Verarbeitungspunkt VA und oberem Kühlpunkt OK, bei dem die Viskosität $10^{13}$ dPa·s beträgt, von besonderer Bedeutung.

Überraschenderweise hat sich herausgestellt, dass eine Beziehung zwischen dieser Differenz einerseits und der Zahl der Winkelfreiheitsgrade andererseits herrscht. Dies erlaubt eine unmittelbare Aussage über VA - OK sowie eine indirekte Bestimmung des oberen Kühlpunktes über die Beziehung OK = VA - (VA - OK).

Ausgangspunkt ist die folgende Überlegung. Wie weit TG und OK voneinander entfernt sind, ist eine Frage des Temperaturverlaufs der Viskosität im Bereich der unterkühlten Schmelze. Über schmale Temperaturintervalle lässt sich dieser mit dem thermischen Aktivierungsmodell von Arrhenius beschreiben. Für eine Beschreibung über den ganzen Temperaturbereich sind aufwendigere Modelle vonnöten. Am meisten verbreitet ist das Modell von Adam und Gibbs, siehe G. Adam, J.H. Gibbs, On the Temperature Dependence of Cooperative Relaxation Properties in Glass-Forming Liquids, J. Chem. Phys. 43 (1965) S. 139-145. Es kombiniert den thermischen Aktivierungsansatz von Arrhenius für die Bewegung eines einzelnen Atoms mit einer Überlegung, wieviele Atome zusammenspielen müssen, damit eine Teilbewegung des viskosen Fließens möglich ist. Das Ergebnis ist eine Beziehung zwischen der Viskosität und der Konfigurationsentropie.

Diese Beziehung erlaubt zu verstehen, warum es "kurze" und "lange" Gläser gibt und wie das von der Zusammensetzung abhängt. Die Faustregel ist: "je höher die Zahl der Konfigurationsfreiheitsgrade ist, desto 'kürzer' ist das Glas. Die Zahl der Konfigurationsfreiheitsgrade hängt wiederum, wie oben bereits dargelegt, von der Zusammensetzung ab. In Gläsern, in denen überwiegend kovalente Bindungen überwiegen, wie die zwischen Silizium und Sauerstoff, ist diese Zahl klein. In Gläsern mit vielen ionischen Bindungen wie zwischen Natrium und Sauerstoff ist sie hoch.

Ein quantitatives Maß der "Kürze" eines Glases, das sich hervorragend für tieferschürfende physikochemische Überlegungen eignet, ist das auf Austen Angell zurückgehende Konzept der "Fragilität", siehe Charles Austen Angell, Thermodynamic aspects of the glass transition in liquids and plastic crystals, Pure & Appl. Chem. 63, No. 10 (1991), S. 1387-1392.

Dieser Hintergrund hat nahegelegt, einen Zusammenhang zwischen der Größe VA - OK und der Zahl der Konfigurationsfreiheitsgrade zu testen. Weil wirkliche Umkonfigurierungen immer eine Ausnutzung der Winkelfreiheitsgrade beinhalten, wird hier auf letztere abgestellt. Die Zahl der Winkelfreiheitsgrade pro Atom fw wird dabei aus der Zahl der winkelbezogenen Zwangsbedingungen wie folgt errechnet, vergleiche (20).

$$f_W = 1 - b_W = 1 - \frac{\sum_{i=1}^{n} c_i \cdot y_i \cdot b_{W,i}}{\sum_{i=1}^{n} c_i \cdot y_i} \qquad (26)$$

Die Auswertung einer Reihe verschiedener silicatischer Gläser unterschiedlichen Typs (Kalk-Natron-Gläser, Borosilicatgläser, Aluminosilicatgläser) führt zu folgender Formel:

$$\frac{1}{VA-OK} = (0.002665819 \cdot f_W + 0.001119212) \cdot \frac{1}{K} \qquad (27)$$

Aus VA und VA-OK läßt sich OK berechnen. Man erhält einen mittleren Fehler von 22K für OK.

Im Hinblick auf die Vorspannbarkeit sollte der nach Formeln (25, 27) berechnete OK bevorzugt mindestens 595°C, weitere bevorzugt mindestens 600°C, besonders bevorzugt mindestens 605°C, am meisten bevorzugt mindestens 610°C betragen. Im Hinblick auf einen flachen Verlauf der Viskositätskurve und die o.a. Werte für den VA sollte der so berechnete OK bevorzugt maximal 650°C, beispielsweise höchstens 640°C, höchstens 630°C oder höchstens 620°C betragen. Bevorzugt liegt der nach Formeln (25, 27) berechnete obere Kühlpunkt OK in einem Bereich von 595°C bis 650°C, weiter bevorzugt von 600°C bis 640°C, weiter bevorzugt von 605°C bis 630°C, weiter bevorzugt von 610°C bis 620°C.

**Auswahl geeigneter konstituierender Phasen**

Reedmergnerit

Im Hinblick auf den gewünschten flachen Verlauf der Viskositätskurve und die damit gewünschte geringe Anzahl von Winkelfreiheitsgraden pro Atom ist Reedmergnerit ein essentieller Bestandteil des erfindungsgemäßen Glases. Reedmergnerit ist aus $SiO_4$- und $BO_4$-Tetraedern aufgebaut, also ein Tektosilicat. Die das Gerüst ausstopfenden Natrium-mionen sind 5-fach koordiniert, siehe Appleman, D.E., Clark, J.R.: Crystal structure of reedmergnerite, a boron albite, and its relation to feldspar crystal chemistry. Am. J. Sci. 50, 1827-1850 (1965). Dies ist für den gewünschten hohen E-Modul von Vorteil, desgleichen für die im Hinblick auf $CTE_{liquid}$ gewünschte hohe Packungsdichte.

Der Anteil von Reedmergnerit am Gesamtglas liegt in einem Bereich von 10 bis 50 Mol%, bevorzugt von 12 bis 45 Mol%, weiter bevorzugt von 15 bis 42 Mol%, weiter bevorzugt von 18 bis 40 Mol%, beispielsweise von 18,5 bis 28,5 Mol% oder von 30 bis 40 Mol%. Der Anteil von Reedmergnerit kann beispielsweise mindestens 10 Mol%, mindestens 12 Mol%, mindestens 15 Mol%, mindestens 18 Mol%, mindestens 18,5 Mol% oder mindestens 30 Mol% betragen. Der Anteil von Reedmergnerit kann beispielsweise höchstens 50 Mol%, höchstens 45 Mol%, höchstens 42 Mol%, höchstens 40 Mol% oder höchstens 28,5 Mol% betragen.

Im Hinblick auf den im Vergleich zu dem hier gewünschten Maximalwert von $CTE_{Glas}$ hohen Wert des $CTE_{Glas}$ von Reedmergneritglas beträgt der Anteil von Reedmergnerit maximal 50 Mol%. Unter einem Mol Reedmergnerit wird ein Mol $(Na_2O \cdot B_2O_3 \cdot 6SiO_2)/8$ verstanden.

$SiO_2$

Im Hinblick auf den gewünschten flachen Verlauf der Viskositätskurve und die damit gewünschte geringe Anzahl von Winkelfreiheitsgraden pro Atom sowie den niedrigen gewünschten Maximalwert $CTE_{Glas}$ wird das Reedmergnerit sinnvollerweise mit reinem $SiO_2$ als weiterer konstituierender Phase kombiniert.

$SiO_2$-Glas ist, wie allgemein bekannt, aus $SiO_4$-Tetraedern aufgebaut, also ein Tektosilicat. Dies ist allerdings nicht "gestopft", was von Nachteil für den gewünschten hohen E-Modul ist, desgleichen für die im Hinblick auf $CTE_{liquid}$ gewünschte hohe Packungsdichte. Außerdem bewirkt ein zu hoher Anteil von $SiO_2$ als konstituierender Phase einen aus verarbeitungstechnischer Sicht zu hohen Verarbeitungspunkt des Glases

Der Anteil von $SiO_2$-Glas am Gesamtglas liegt in einem Bereich von 10 bis 60 Mol%, bevorzugt von 20 bis 55 Mol%, weiter bevorzugt von 25 bis 52 Mol%, weiter bevorzugt von 30 bis 50 Mol%, weiter bevorzugt von 32 bis 49 Mol%, weiter bevorzugt von 33 bis 47 Mol%, beispielsweise von 35 bis 46 Mol%. Der Anteil von $SiO_2$-Glas kann beispielsweise mindestens 10 Mol%, mindestens 20 Mol%, mindestens 25 Mol%, mindestens 30 Mol%, mindestens 32 Mol%, mindestens 33 Mol% oder mindestens 35 Mol% betragen. Der Anteil an $SiO_2$-Glas kann beispielsweise höchstens 60 Mol%, höchstens 55 Mol%, höchstens 52 Mol%, höchstens 50 Mol%, höchstens 49 Mol%, höchstens 47 Mol% oder höchstens 46 Mol% betragen.

## Kalium-Reedmergnerit

Um die Entglasungsstabilität zu erhöhen, kann dem Glas noch das Kalium-Analogon des Reedmergnerit beigemengt werden. Das fertige Glas enthält im Falle einer solchen Beimengung als Alkali nicht nur Natrium, sondern auch Kalium und ist von daher entglasungsstabiler. Bezüglich der Zahl der Winkelfreiheitsgrade pro Atom verhält es sich ähnlich wie Reedmergnerit. Dieses Grundglas wird nachfolgend als "Kalium-Reedmergnerit" bezeichnet, da es als Kalium-Analogon des Reedmergnerit mit Danburitstruktur aufgefasst werden kann, siehe Mineralogical Magazine 57 (1993) 157-164

Die Gläser dieser Erfindung können Kalium-Reedmergnerit in einem Anteil von 0 bis 25 Mol% enthalten. Im Hinblick auf die Entglasungsstabilität enthalten bevorzugte Ausführungsformen wenigstens 1 Mol% Kalium-Reedmergnerit, insbesondere wenigstens 2 Mol% oder wenigstens 5 Mol%. Unter einem Mol Kalium-Reedmergnerit wird ein Mol $(K_2O \cdot B_2O_3 \cdot 6SiO_2)/8$ verstanden.

Bevorzugt liegt der Anteil von Kalium-Reedmergnerit am erfindungsgemäßen Glas in einem Bereich von 1 bis 20 Mol%, weiter bevorzugt von 2 bis 19 Mol%, weiter bevorzugt von 2,5 bis 18,5 Mol%, beispielsweise von 3 bis 17 Mol% oder von 4 bis 16 Mol% oder von 5 bis 15 Mol%. Der Anteil von Kalium-Reedmergnerit kann beispielsweise mindestens 1 Mol%, mindestens 2 Mol%, mindestens 2,5 Mol%, mindestens 3 Mol%, mindestens 4 Mol% oder mindestens 5 Mol% betragen. Der Anteil von Kalium-Reedmergnerit kann beispielsweise höchstens 20 Mol%, höchstens 19 Mol%, höchstens 18,5 Mol%, höchstens 17 Mol%, höchstens 16 Mol% oder höchstens 15 Mol% betragen.

In bevorzugten Ausführungsformen ist der Anteil an Reedmergnerit in dem Glas größer als der Anteil an Kalium-Reedmergnerit, insbesondere wenigstens doppelt so groß.

## $B_2O_3$

Auch ein Anteil an Dibortrioxid führt zu einer geringen Zahl von Winkelfreiheitsgraden (nicht: 3D-Winkelfreiheitsgrade), zwar in einem geringeren Maße als Siliziumdioxid, aber ohne die Schmelzbarkeit zu beeinflussen. Es kann daher ein Anteil von 0 Mol% bis 10 Mol% vorgesehen werden. Ein zu hoher Anteil von $B_2O_3$ senkt allerdings den E-Modul. Bevorzugt liegt der Anteil von Dibortrioxid in einem Bereich von 0,5 bis 8 Mol%, weiter bevorzugt von 1 bis 6 Mol%, weiter bevorzugt von 1,5 bis 5 Mol%, beispielsweise von 2 bis 4,5 Mol%. Der Anteil von Dibortrioxid kann beispielsweise mindestens 0,5 Mol%, mindestens 1 Mol%, mindestens 1,5 Mol% oder mindestens 2 Mol% betragen. Der Anteil von Dibortrioxid kann beispielsweise höchstens 10 Mol%, höchstens 8 Mol%, höchstens 6 Mol%, höchstens 5 Mol% oder höchstens 4,5 Mol% betragen.

## Cordierit, Anorthit, Diopsid

Reedmergnerit und sein Kalium-Analogon sind alkalihaltig. Alkalihaltige Gläser haben, wie gesagt, einen hohen Ausdehnungskoeffizienten. Zur Absenkung des Ausdehnungskoeffizienten können $SiO_2$ und $B_2O_3$ beigemischt werden, die aber bzgl. des VA und des E-Moduls nur eingeschränkt verwendet werden können. Es können noch weitere Phasen beigemischt werden, deren Beitrag den Ausdehnungskoeffizienten zu mittleren Werten verschiebt, ohne die o.a. Nachteile von $SiO_2$ und $B_2O_3$ zu haben. Dies sind die Erdalkali(alumino-)silicate Cordierit, Anorthit und Diopsid. Anorthit und Diopsid sind besonders bevorzugt und eine der beiden Phasen ist zwingend in den Gläsern der Erfindung vorhanden.

Unter einem Mol Cordierit wird ein Mol $(2MgO \cdot 2Al_2O_3 \cdot 5SiO_2)/9$ verstanden. Der Anteil an Cordierit in den erfindungsgemäßen Gläsern beträgt 0 bis 10 Mol%, bevorzugt 0,1 bis 8 Mol%, weiter bevorzugt 0,5 bis 6 Mol%, weiter bevorzugt 0,9 bis 4,1 Mol%, beispielsweise 1,5 bis 4 Mol%. Der Anteil an Cordierit kann beispielsweise mindestens 0,1 Mol%, mindestens 0,5 Mol%, mindestens 0,9 Mol% oder mindestens 1,5 Mol% betragen. Der Anteil an Cordierit kann beispielsweise höchstens 10 Mol%, höchstens 8 Mol%, höchstens 6 Mol%, höchstens 4,1 Mol% oder höchstens 4 Mol% betragen.

Unter einem Mol Anorthit wird ein Mol $(CaO \cdot Al_2O_3 \cdot 2SiO_2)/4$ verstanden. Der Anteil an Anorthit in den erfindungsgemäßen Gläsern beträgt 0 bis 15 Mol%, bevorzugt 1 bis 12 Mol%, weiter bevorzugt 1,5 bis 10 Mol%, beispielsweis 2 bis 9 Mol% oder 3 bis 8 Mol%. Der Anteil an Anorthit kann beispielsweise mindestens 1 Mol%, mindestens 1,5 Mol%, mindestens 2 Mol% oder mindestens 3 Mol% betragen. Der Anteil an Anorthit kann beispielsweise höchstens 15 Mol%, höchstens 12 Mol%, höchstens 10 Mol%, höchstens 9 Mol% oder höchstens 8 Mol% betragen.

Unter einem Mol Diopsid wird ein Mol $(MgO \cdot CaO \cdot 2SiO_2)/4$ verstanden. Der Anteil an Diopsid in den erfindungsgemäßen Gläsern beträgt 0 bis 15 Mol%, bevorzugt 1 bis 12 Mol%, weiter bevorzugt 2 bis 10 Mol%, beispielsweise 3 bis 8 Mol%. Der Anteil an Diopsid kann beispielsweise mindestens 1 Mol%, mindestens 2 Mol% oder mindestens 3 Mol% betragen. Der Anteil an Diopsid kann beispielsweise höchstens 15 Mol%, höchstens 12 Mol%, höchstens 10 Mol% oder höchstens 8 Mol% betragen.

Erfindungsgemäß liegt die Summe der Anteile von Anorthit und Diopsid in den erfindungsgemäßen Gläsern in einem Bereich von 1 bis 30 Mol%, bevorzugt von 2 bis 25 Mol%, weiter bevorzugt von 5 bis 20 Mol%, weiter bevorzugt von 6 bis 19 Mol%, weiter bevorzugt von 7 bis 18 Mol%, weiter bevorzugt von 8,5 bis 17 Mol%, weiter bevorzugt von 10 bis 16 Mol%. Die Summe der Anteile von Anorthit und Diopsid kann beispielsweise mindestens 1 Mol%, mindestens 2 Mol%, mindestens 5 Mol%, mindestens 6 Mol%, mindestens 7 Mol%, mindestens 8,5 Mol% oder mindestens 10 Mol% betragen. Die Summe der Anteile von Anorthit und Diopsid kann beispielsweise höchstens 30 Mol%, höchstens 25 Mol%, höchstens 20 Mol%, höchstens 19 Mol%, höchstens 18 Mol%, höchstens 17 Mol% oder höchstens 16 Mol% betragen.

Weitere Komponenten

Zusätzlich zu den bereits genannten Komponenten kann das Glas weitere Bestandteile enthalten, die hierin als "Rest" bezeichnet werden. Der Anteil des Restes an dem erfindungsgemäßen Glas beträgt vorzugsweise höchstens 5 Mol-%, um die durch sorgsame Auswahl geeigneter Grundgläser eingestellten Glaseigenschaften nicht zu stören. In besonders bevorzugten Ausführungsformen beträgt der Anteil an Rest in dem Glas höchstens 3 Mol-%, mehr bevorzugt höchstens 2 Mol-% oder höchstens 1 Mol-% oder höchstens 0,5 Mol%. Der Rest enthält insbesondere Oxide, die nicht in den hierin genannten Grundgläsern enthalten sind. Somit enthält der Rest insbesondere kein $SiO_2$, $Al_2O_3$, $B_2O_3$, MgO, CaO, $Na_2O$ oder $K_2O$.

Wenn es in dieser Beschreibung heißt, die Gläser seien frei von einer Komponente bzw. einer konstituierenden Phase oder enthalten eine gewisse Komponente bzw. konstituierende Phase nicht, so ist damit gemeint, dass diese Komponente bzw. konstituierende Phase allenfalls als Verunreinigung in den Gläsern vorliegen darf. Das bedeutet, dass sie nicht in wesentlichen Mengen zugesetzt wird. Nicht wesentliche Mengen sind erfindungsgemäß Mengen von weniger als 300 ppm (molar), bevorzugt weniger als 100 ppm (molar), besonders bevorzugt weniger als 50 ppm (molar) und am meisten bevorzugt weniger als 10 ppm (molar). Die Gläser dieser Erfindung sind insbesondere frei von Lithium, Zink, Barium, Zirkon, Blei, Arsen, Antimon, Zinn, Wismut und/oder Cadmium.

**Bevorzugte Glaszusammensetzungen**

Die bevorzugten Ausführungsform ergeben sich im Rahmen des o.a. Grundsystems aus der Vorgabe der gewünschten Werte für $CTE_{Glas}$, $CTE_{liquid}$, E-Modul, Dichte, Verarbeitungspunkt und oberer Kühlpunkt.

Eine bevorzugte Zusammensetzung ist durch folgende das Glas konstituierende Phasen gekennzeichnet:

| konstituierende Phase | Min (Mol%) | Max (Mol%) |
|---|---|---|
| Reedmergnerit | 12 | 45 |
| Kalium-Reedmergnerit | 1 | 20 |
| Cordierit | 0,1 | 8 |
| Anorthit | 1 | 12 |
| Diopsid | 1 | 12 |
| Siliziumdioxid | 20 | 55 |
| Dibortrioxid | 0,5 | 8 |

Eine ganz besonders bevorzugte Zusammensetzung ist durch folgende das Glas konstituierende Phasen gekennzeichnet:

| konstituierende Phase | Min (Mol%) | Max (Mol%) |
|---|---|---|
| Reedmergnerit | 18,9 | 39,6 |
| Kalium-Reedmergnerit | 2,5 | 18,4 |
| Cordierit | 0,9 | 4,1 |
| Anorthit | 2,3 | 10,0 |
| Diopsid | 2 | 11,2 |
| Siliziumdioxid | 33,4 | 46,1 |
| Dibortrioxid | 1,8 | 4,9 |

**Herstellung**

Erfindungsgemäß ist auch ein Verfahren zur Herstellung eines Glases dieser Erfindung, mit den Schritten:

- Schmelzen der Glasrohstoffe,

- optional Formen eines Glasartikels, insbesondere eines Glasrohres, eines Glasbandes, oder einer Glasscheibe, aus der Glasschmelze

- Abkühlen des Glases.

Die erfindungsgemäßen Gläser können beispielsweise in technischen Glasschmelzaggregaten sowohl mit Air Fuel (Luftverbrennung) als auch mit Sauerstoffverbrennung (Oxy Fuel) oder auch vollelektrisch erschmolzen werden. Zum Entfernen der Restgasblasen sind alle üblichen chemischen und physikalischen Läuterverfahren geeignet. Bevorzugt ist jedoch eine Läuterung mit Alkalihalogeniden, vorzugsweise mit NaCl oder KCl, besonders bevorzugt mit NaCl. Dabei können die Alkalihalogenidsalze beispielsweise in einer Menge von 0,5 - 2,5 Ma.-% zugesetzt werden.
Ein erfindungsgemäßer Glaskörper wird vorzugsweise als Glasplatte oder Glasscheibe verwendet. Die Herstellung der Glaskörper kann mit dem erfindungsgemäß besonders bevorzugten Floatverfahren geschehen. Die Formgebung der erfindungsgemäßen Glaskörper kann auch mit anderen zur Herstellung von Flachglas bekannten Verfahren wie verschiedenen Ziehverfahren (z.B. Up Draw, Down Draw, Over Flow Fusion, Fourcault), dem Gussverfahren oder dem Walzverfahren erfolgen.
Das Entspannen/Abkühlen der erfindungsgemäßen Glaskörper erfolgt bevorzugt in kontinuierlich betriebenen Rollenkühlöfen, die elektrisch oder gasbeheizt sein können. Die erfindungsgemäßen Glaskörper weisen danach bevorzugt nur noch geringe thermische Spannungen auf (bevorzugt < 2 N/mm$^2$).
Das erfindungsgemäße Verfahren kann den weiteren Schritt der Kaltnachverarbeitung des Glases umfassen. Die erfindungsgemäßen Glaskörper können beispielsweise durch Schneiden und Kantenschleifen in eine beliebige Form gebracht werden, z.B. für Brandschutzverglasungen, Herdsichtscheiben für Pyrolyseöfen, Mikrowellenabdeckungen, Kochflächen für Küchenherde oder gebogene Windschutzscheiben für Fahrzeuge.
Das erfindungsgemäße Verfahren kann den Schritt des thermischen Vorspannens umfassen. Die erfindungsgemäßen Gläser können beispielsweise nach dem Schmelz-, Formgebungs-, Entspannungs-/Kühlprozess sowie Kaltnachverarbeitungsprozessen einem thermischen Vorspannprozess unterworfen werden. Dabei werden die erfindungsgemäßen Glaskörper, beispielsweise Flachglas, bevorzugt liegend oder hängend in eine Vorrichtung geführt und schnell auf eine Temperatur bis maximal 150°C über die Transformationstemperatur $T_G$ aufgeheizt. Danach wird der Glaskörper schnell abgekühlt, beispielsweise durch Anblasen durch ein Düsensystem mit kalter Luft. Infolge des schnellen Abkühlens der Glasoberflächen werden diese in einem aufgeweiteten Gitter eingefroren, während sich das Innere der Glaskörper langsam abkühlt und Zeit hat, sich stärker zusammenzuziehen. Dadurch entsteht in der Oberflächenschicht eine Druckspannung und im Inneren der Glaskörper eine Zugspannung. Dabei ist die Höhe der Druckvorspannung von verschiedenen Glasparameter wie $CTE_{Glas}$, $CTE_{liquid}$, oberer Kühlpunkt, Erweichungspunkt, E-Modul und auch von der Höhe des Wärmeüberganges zwischen Kühlmedium und Glasoberfläche sowie der Dicke der Glaskörper abhängig. Üblicherweise wird eine Druckvorspannung von mindestens 120 MPa angestrebt. Dadurch kann die Biegefestigkeit der Glaskörper gegenüber nichtvorgespanntem Glas verdoppelt bis verdreifacht werde. Erfindungsgemäß bevorzugt wird das Glas auf eine Temperatur von 700 bis 750°C aufgeheizt und mit kalter Luft bei einem Wärmeübergangskoeffizienten von 300 bis 550 W/m$^2$ K bei 1 - 16 kPa Anblasdruck vorgespannt. Mit den erfindungsgemäßen Gläsern werden auf handelsüblichen Luftvorspannanlagen bevorzugt Werte der Druckvorspannung von 120 - 160 MPa erreicht.

**Verwendungen und Glasartikel**

Die Erfindung betrifft auch die Verwendung der erfindungsgemäßen Glaskörper als Brandschutzsicherheitsglas, als Sichtscheiben in Pyrolyseherden, als Abdeckscheiben in Mikrowellenöfen, als Kochflächen für Haushaltsgeräte, als Sichtscheiben in Fahrzeugverglasungen, als hochfeste und chemisch beständige Druckverglasung (Maxosscheiben) sowie als schusssichere Verglasung (Panzerglas) in Fahrzeugen und Gebäuden.
Erfindungsgemäß sind neben dem Glas auch aus dem Glas geformte Glasartikel wie Scheiben, insbesondere solche mit einer Dicke in einem Bereich von 4 bis 12 mm.
Das Glas der vorliegenden Erfindung lässt sich besonders gut thermisch vorspannen. Die Erfindung betrifft daher sowohl thermisch vorspannbare Glasartikel als auch thermisch vorgespannte Glasartikel.

**Bevorzugte Eigenschaften**

Ein Glas und/oder ein Glasartikel der Erfindung entspricht bevorzugt DIN EN 1748-1.

Bevorzugt sind die Sicherheitsglaseigenschaften nach DIN EN 13024-1 gegeben (4 Punkt-Biegefestigkeit min. 120 MPa, min. 40 Bruchstücke d=4-12 mm bei 50x50mm$^2$). Bei einer Dicke d = 6 mm liegt die Anzahl der Bruchstücke bei 50x50 mm$^2$ bevorzugt in einem Bereich von 50 bis 180, weiter bevorzugt in einem Bereich von 60 bis 150, weiter bevorzugt in einem Bereich von 70 bis 130, weiter bevorzugt in einem Bereich von 80 bis 120 Bruchstücken.

Die Feuerwiderstandszeit nach DIN 4102/ISO 834 für d=6 mm beträgt bevorzugt mindestens 120 min (G 90) nach ETK, weiter bevorzugt mindestens 120 Minuten, noch weiter bevorzugt mindestens 180 Minuten

Bevorzugt liegt die Abbruchtemperatur im Brandversuch nach Einheitstemperaturkurve ETK für d = 6 mm in einem Bereich von 1030°C bis 1130°C, beispielsweise von 1040°C bis 1120°C, von 1050°C bis 1110°C oder von 1070°C bis 1100°C. Die Ermittlung erfolgt bevorzugt gemäß EN 1363. Die Abbruchtemperatur im Brandversuch nach Einheitstemperaturkurve ETK für d = 6 mm kann beispielsweise mindestens 1030°C, mindestens 1040°C, mindestens 1050°C oder mindestens 1070°C betragen. Die Abbruchtemperatur im Brandversuch nach Einheitstemperaturkurve ETK für d = 6 mm kann beispielsweise höchstens 1130°C, höchstens 1120°C, höchstens 1110°C oder höchstens 1100°C betragen.

Bevorzugt ist die Erreichung o.g. Eigenschaften auf konventionellen Luftvorspannanlagen für Kalk-Natron-Glas (Strahlung oder Konvektion) mit Maximaltemperaturen von 750°C und Wärmeübergangskoeffizienten von max. 500 W/m$^2$K möglich. Die Eigenschaften betreffen also insbesondere thermisch vorgespannte Glasartikel der Erfindung.

Bevorzugt liegt die Oberflächendruckspannung (CS) bei einem vorgespannten Glasartikel der Erfindung in einem Bereich von 100 bis 160 MPa, weiter bevorzugt von 110 bis 150 MPa, weiter bevorzugt in einem Bereich von 120 bis 140 MPa. Die Oberflächendruckspannung (CS) bei einem vorgespannten Glasartikel der Erfindung kann beispielsweise mindestens 100 MPa, mindestens 110 MPa oder mindestens 120 MPa betragen. Die Oberflächendruckspannung (CS) bei einem vorgespannten Glasartikel der Erfindung kann beispielsweise höchstens 160 MPa, höchstens 150 MPa oder höchstens 140 MPa betragen.

Bevorzugt liegt die 4 Punkt-Biegefestigkeit bei einem vorgespannten Glasartikel der Erfindung in einem Bereich von 160 bis 220 MPa, weiter bevorzugt von 170 bis 210 MPa, weiter bevorzugt von 180 bis 200 MPa. Die 4 Punkt-Biegefestigkeit wird bevorzugt nach EN 1288-3 bestimmt. Die 4 Punkt-Biegefestigkeit bei einem vorgespannten Glasartikel der Erfindung kann beispielsweise mindestens 160 MPa, mindestens 170 MPa oder mindestens 180 MPa betragen. Die 4 Punkt-Biegefestigkeit bei einem vorgespannten Glasartikel der Erfindung kann beispielsweise höchstens 220 MPa, höchstens 210 MPa oder höchstens 200 MPa betragen.

**Beispiele**

**Vergleichsbeispiele**

Nachfolgend werden zunächst nicht-erfindungsgemäße Glaszusammensetzungen beschrieben. Diese Zusammensetzungen gehören entweder nicht zum erfindungsgemäßen Grundsystem oder erfüllen nicht die Bedingungen der Anteile der konstituierenden Phasen.

In der nachfolgenden Tabelle sind zunächst die Oxidzusammensetzungen der Vergleichsbeispiele V1 bis V8 (in Mol% auf Oxidbasis) gezeigt.

**Tabelle 6**

| Oxid | V1 | V2 | V3 | V4 | V5 | V6 | V7 | V8 |
|------|-----|------|-----|------|------|------|------|------|
| SiO$_2$ | 83,5 | 81,8 | 79,1 | 81,9 | 79,2 | 63,0 | 60,1 | 68,8 |
| B$_2$O$_3$ | 11,1 | 14,6 | 9,1 | 9,4 | 11,3 | 3,7 | 9,6 | 0,0 |
| Al$_2$O$_3$ | 1,5 | 0,6 | 1,6 | 2,7 | 2,5 | 11,5 | 13,8 | 9,3 |
| Na$_2$O | 3,5 | 3,0 | 2,6 | 4,5 | 6,1 | 0,0 | 0,0 | 0,0 |
| K$_2$O | 0,3 | 0,0 | 2,0 | 0,3 | 0,0 | 0,0 | 0,0 | 0,0 |
| MgO | 0,0 | 0,0 | 0,0 | 0,0 | 0,0 | 6,5 | 8,3 | 0,0 |
| CaO | 0,0 | 0,0 | 2,8 | 1,1 | 0,0 | 11,6 | 6,0 | 9,7 |
| ZnO | 0,0 | 0,0 | 1,6 | 0,0 | 0,0 | 2,4 | 0,0 | 10,0 |
| BaO | 0,0 | 0,0 | 0,0 | 0,0 | 0,4 | 1,3 | 2,2 | 2,2 |
| SrO | 0,0 | 0,0 | 0,0 | 0,0 | 0,0 | 0,0 | 0,0 | 0,0 |

(fortgesetzt)

| Oxid | V1 | V2 | V3 | V4 | V5 | V6 | V7 | V8 |
|---|---|---|---|---|---|---|---|---|
| $ZrO_2$ | 0,0 | 0,0 | 1,3 | 0,0 | 0,5 | 0,0 | 0,0 | 0,0 |

Die Umrechnung in konstituierende Phasen ergibt die in der nachfolgenden Tabelle gezeigten Zusammensetzungen der Beispielgläser V1 bis V8 (in Mol%).

**Tabelle 7**

| konstituierende Phase | V1 | V2 | V3 | V4 | V5 | V6 | V7 | V8 |
|---|---|---|---|---|---|---|---|---|
| Reedmergnerit | 28,0 | 24,0 | 20,4 | 36,2 | 48,8 | 63,0 | 0,0 | 0,0 |
| Kalium-Reedmergnerit | 2,6 | 0,0 | 16,1 | 2,6 | 0,0 | 3,7 | 0,0 | 0,0 |
| Cordierit | 3,4 | 2,3 | -2,9 | 3,7 | 5,6 | 11,5 | 36,3 | -0,8 |
| Anorthit | 3,0 | 2,0 | 8,8 | 7,7 | 4,9 | 0,0 | 22,9 | 38,0 |
| Diopsid | -3,0 | -2,0 | 2,5 | -3,3 | -4,9 | 0,0 | 1,0 | 0,7 |
| Siliziumdioxid | 58,7 | 60,3 | 47,6 | 48,5 | 39,5 | 6,5 | 28,1 | 49,9 |
| Dibortrioxid | 7,3 | 13,5 | 4,5 | 4,5 | 5,2 | 11,6 | 9,6 | 0,0 |
| Summe | 100,0 | 100,0 | 97,2 | 100,0 | 99,1 | 96,3 | 97,8 | 87,8 |

Bei den Vergleichsbeispielen V3 sowie V5 bis V8 addieren sich die Anteile der konstituierenden Phasen nicht zu 100 Mol%. Der Grund dafür ist, dass diese Gläser Oxide enthalten, die nicht in den hierin genannten Grundgläsern enthalten sind und somit einen "Rest" darstellen.

Die Vergleichsbeispiele V1 bis V5 sowie V8 enthalten negative Phasenanteile und sind somit nicht Teil des erfindungsgemäßen Grundsystems. Bei V6 sind der Reedmergnerit-Anteil und der Dibortrioxid-Anteil zu hoch, der Siliziumdioxid-Anteil dagegen zu gering. Bei V7 sind hingegen der Cordierit-Anteil und der Anorthit-Anteil zu hoch sowie der Reedmergnerit-Anteil zu gering.

In der nachfolgenden Tabelle sind die Oxidzusammensetzungen der Vergleichsbeispiele V9 bis V16 (in Mol% auf Oxidbasis) gezeigt. Diese Vergleichsbeispiele sind ebenfalls nicht erfindungsgemäß.

**Tabelle 8**

| Oxid | V9 | V10 | V11 | V12 | V13 | V14 | V15 | V16 |
|---|---|---|---|---|---|---|---|---|
| $SiO_2$ | 65,8 | 71,3 | 71,3 | 82,9 | 65,1 | 77,0 | 80,5 | 80,4 |
| $B_2O_3$ | 7,4 | 0,0 | 0,0 | 11,6 | 1,9 | 8,8 | 9,4 | 9,2 |
| $Al_2O_3$ | 10,1 | 0,6 | 0,6 | 1,5 | 14,4 | 2,8 | 2,6 | 2,5 |
| $Na_2O$ | 0,0 | 7,0 | 12,4 | 4,0 | 3,2 | 6,2 | 4,8 | 4,8 |
| $K_2O$ | 0,0 | 2,0 | 0,3 | 0,0 | 0,0 | 0,3 | 0,5 | 0,4 |
| MgO | 4,8 | 3,1 | 5,9 | 0,0 | 6,6 | 0,0 | 0,0 | 0,0 |
| CaO | 9,2 | 12,2 | 9,5 | 0,0 | 0,0 | 0,6 | 2,2 | 2,8 |
| ZnO | 2,8 | 0,0 | 0,0 | 0,0 | 8,6 | 2,8 | 0,0 | 0,0 |
| BaO | 0,0 | 0,0 | 0,0 | 0,0 | 0,0 | 1,5 | 0,0 | 0,0 |
| SrO | 0,0 | 2,4 | 0,0 | 0,0 | 0,0 | 0,0 | 0,0 | 0,0 |
| $ZrO_2$ | 0,0 | 1,5 | 0,0 | 0,0 | 0,0 | 0,0 | 0,0 | 0,0 |

Die Umrechnung in konstituierende Phasen ergibt die in der nachfolgenden Tabelle gezeigten Zusammensetzungen der Beispielgläser V9 bis V16 (in Mol%).

**Tabelle 9**

| konstituierende Phase | V9 | V10 | V11 | V12 | V13 | V14 | V15 | V16 |
|---|---|---|---|---|---|---|---|---|
| Reedmergnerit | 0,0 | 56,1 | 99,2 | 32,0 | 25,9 | 49,8 | 38,2 | 38,1 |
| Kalium-Reedmergnerit | 0,0 | 15,8 | 2,5 | 0,0 | 0,0 | 2,7 | 3,7 | 3,2 |
| Cordierit | 12,8 | -19,1 | -6,8 | 3,4 | 47,4 | 5,1 | 0,9 | -0,5 |
| Anorthit | 28,9 | 19,4 | 8,4 | 3,0 | 15,6 | 6,8 | 9,7 | 10,6 |
| Diopsid | 7,7 | 29,3 | 29,6 | -3,0 | -15,6 | -4,5 | -0,8 | 0,5 |
| Siliziumdioxid | 40,3 | 3,6 | -20,1 | 57,1 | 19,4 | 33,7 | 44,1 | 44,2 |
| Dibortrioxid | 7,4 | -9,0 | -12,7 | 7,6 | -1,3 | 2,2 | 4,2 | 4,0 |
| Summe | 97,2 | 96,1 | 100,0 | 100,0 | 91,4 | 95,8 | 100,0 | 100,0 |

Bei den Vergleichsbeispielen V9, V10, V13 und V14 addieren sich die Anteile der konstituierenden Phasen nicht zu 100 Mol%. Der Grund dafür ist, dass diese Gläser Oxide enthalten, die nicht in den hierin genannten Grundgläsern enthalten sind und somit einen "Rest" darstellen.

Die Vergleichsbeispiele V10 bis V16 enthalten negative Phasenanteile und sind somit nicht Teil des erfindungsgemäßen Grundsystems. Bei V9 ist der Anorthit-Anteil zu hoch und der Reedmergnerit-Anteil zu gering.

**Ausführungsbeispiele der Erfindung**

Die folgenden Beispielgläser sind erfindungsgemäße Ausführungsbeispiele der vorliegenden Erfindung.

In der nachfolgenden Tabelle sind zunächst die Zusammensetzungen der erfindungsgemäßen Ausführungsbeispiele A1 bis A8 in konstituierenden Phasen (in Mol%) gezeigt.

**Tabelle 10**

| konstituierende Phase | A1 | A2 | A3 | A4 | A5 | A6 | A7 | A8 |
|---|---|---|---|---|---|---|---|---|
| Reedmergnerit | 35.968 | 34.21 | 39.59 | 39.39 | 19.88 | 39.54 | 19.09 | 19.00 |
| Kalium-Reedmergnerit | 3.156 | 2.62 | 2.61 | 2.59 | 15.70 | 2.60 | 15.70 | 17.28 |
| Cordierit | 0.983 | 2.02 | 1.81 | 1.61 | 4.10 | 2.49 | 3.46 | 2.34 |
| Anorthit | 8.843 | 6.67 | 5.61 | 4.55 | 2.40 | 6.20 | 2.97 | 3.28 |
| Diopsid | 2.199 | 4.32 | 7.52 | 10.68 | 8.59 | 6.91 | 8.24 | 7.71 |
| Dibortrioxid | 4.182 | 4.69 | 3.98 | 3.96 | 4.84 | 1.77 | 4.68 | 4.33 |
| Siliziumdioxid | 44.669 | 45.47 | 38.89 | 37.21 | 44.50 | 40.50 | 45.86 | 46.06 |
| Summe | 100.0 | 100.0 | 100,0 | 100,0 | 100,0 | 100,0 | 100,0 | 100,0 |

Die Zusammensetzung der weiteren erfindungsgemäßen Ausführungsbeispiele A9 bis A11 ist in der folgenden Tabelle in konstituierenden Phasen (in Mol%) gezeigt.

**Tabelle 11**

| konstituierende Phase | A9 | A10 | A11 |
|---|---|---|---|
| Reedmergnerit | 27.02 | 19.09 | 32.16 |
| Kalium-Reedmergnerit | 18.30 | 15.70 | 7.94 |
| Cordierit | 3.95 | 3.46 | 2.25 |
| Anorthit | 4.22 | 2.97 | 9.98 |
| Diopsid | 11.15 | 8.24 | 2.02 |
| Dibortrioxid | 1.85 | 4.68 | 3.98 |

## EP 3 838 859 A1

(fortgesetzt)

| konstituierende Phase | A9 | A10 | A11 |
|---|---|---|---|
| Siliziumdioxid | 33.50 | 45.86 | 41.68 |
| Summe | 100,0 | 100,0 | 100,0 |

Wie oben beschrieben, lassen sich aus der Glaszusammensetzung in konstituierenden Phasen verschiedene Eigenschaften berechnen. Die folgende Tabelle zeigt die nach Formel (5) berechnete Dichte $\rho$, den nach Formel (4) berechneten thermischen Ausdehnungskoeffizienten $CTE_{Glas}$, den nach Formel (24) berechneten $CTE_{liquid}$, den nach Formel (19) berechneten Elastizitätsmodul E, den nach Formel (25) berechneten Verarbeitungspunkt VA, und den nach Formel (25, 27) berechneten oberen Kühlpunkt OK für die erfindungsgemäßen Ausführungsbeispiele A1 bis A11.

| | Dichte $\rho$ [g/cm$^3$] | $CTE_{Glas}$ [ppm/K] | $CTE_{liquid}$ [ppm/K] | E-Modul [GPa] | VA [°C] | OK [°C] |
|---|---|---|---|---|---|---|
| A1 | 2,33 | 4,01 | 23,93 | 74,54 | 1255 | 612 |
| A2 | 2,32 | 3,99 | 23,34 | 74,06 | 1256 | 612 |
| A3 | 2,35 | 4,41 | 26,36 | 75,58 | 1234 | 611 |
| A4 | 2,36 | 4,55 | 27,22 | 75,83 | 1226 | 612 |
| A5 | 2,32 | 4,11 | 24,71 | 73,21 | 1250 | 612 |
| A6 | 2,36 | 4,30 | 27,85 | 77,24 | 1239 | 616 |
| A7 | 2,32 | 4,03 | 24,40 | 73,14 | 1254 | 612 |
| A8 | 2,32 | 4,03 | 24,72 | 73,26 | 1254 | 609 |
| A9 | 2,39 | 4,79 | 31,68 | 77,2 | 1214 | 615 |
| A10 | 2,32 | 4,03 | 24,40 | 73,14 | 1254 | 612 |
| A11 | 2,34 | 4,17 | 25,39 | 74,86 | 1247 | 616 |

Durch geeignete Auswahl der konstituierenden Phasen ist es also gelungen, Gläser mit vorteilhaften Eigenschaften hinsichtlich der Dichte, dem thermischen Ausdehnungskoeffizienten $CTE_{Glas}$, dem $CTE_{liquid}$, dem Elastizitätsmodul E, dem Verarbeitungspunkt VA und dem oberen Kühlpunkt OK zu erhalten.

**Vorspannen und Brandversuche**

Im Labormaßstab wurden in 1-Liter Schmelztiegeln verschiedene Glaszusammensetzungen erschmolzen und die jeweiligen Eigenschaften bestimmt. Ausgewählte Glaszusammensetzungen wurden im kleintechnischen Maßstab (10-Liter Schmelztiegel) erschmolzen, das Glas bei Temperaturen von ca. 1300°C in eine Handwalzanlage überführt und zwischen 2 wassergekühlten Walzen zu Flachglaskörpern von ca. 6 mm Glasdicke geformt und langsam entspannt und auf Raumtemperatur abgekühlt. Die erhaltenen Flachglaskörper wurden auf ein Format 350x150 mm$^2$ nach-verarbeitet (Schneiden, Kantenschleifen) und in einer handelsüblichen Luftvorspannanlage thermisch vorgespannt. An den thermisch vorgespannten Glaskörpern wurden die Druckvorspannung, die Biegefestigkeit und das Krümelbild ermittelt. Ausgewählte thermisch vorgespannte Glaskörper wurden in einem Klein-Brand-Testofen einem Brandtest unterworfen.

Die Ergebnisse sind in den folgenden beiden Tabellen für die Vergleichsbeispiele V11, V1 und V4 sowie die erfindungsgemäßen Ausführungsbeispiele A1, A7, A8 und A10 gezeigt.

Die folgende Tabelle zeigt die ermittelte Druckspannung (in MPa), die ermittelte Biegefestigkeit (in MPa) und die ermittelte Krümelzahl auf 50x50 mm$^2$. Die Krümelzahl wurde nach DIN EN 13024-1 bestimmt.

| Glas-Nr. | Druckspannung (in MPa) | Biegefestigkeit (in MPa) | Krümelzahl auf 50x50 mm$^2$ |
|---|---|---|---|
| V11 | 115 | 178 | 85 |
| V1 | 47 | 122 | < 20 |
| V4 | 113 | 174 | 92 |
| A1 | 127 | 182 | 110 |

22

(fortgesetzt)

| Glas-Nr. | Druckspannung (in MPa) | Biegefestigkeit (in MPa) | Krümelzahl auf 50x50 mm$^2$ |
|---|---|---|---|
| A7 | 155 | 204 | 175 |
| A8 | 147 | 193 | 162 |
| A10 | 140 | 187 | 155 |

Es ist ersichtlich, dass die erfindungsgemäßen Gläser im Vergleich zu den Vergleichsbeispielen nach thermischer Vorspannung eine höhere Druckspannung, eine höhere Biegefestigkeit und eine höhere Krümelzahl aufweisen. Die erfindungsgemäßen Gläser zeichnen sich somit gegenüber den Vergleichsbeispielen durch verbesserte Eigenschaften aus.

Die folgende Tabelle zeigt die Ergebnisse der Brandversuche.

| Glas-Nr. | Abbruch nach Minuten | Abbruch nach Temperatur (°C) ETK |
|---|---|---|
| V11 | 45 | 903 |
| V1 | 90 | 1006 |
| V4 | 105 | 1029 |
| A1 | 121 | 1049 |
| A7 | 171 | 1102 |
| A8 | 161 | 1093 |
| A10 | 151 | 1083 |

Es ist ersichtlich, dass die erfindungsgemäßen Gläser im Vergleich zu den Vergleichsbeispielen in den Brandversuchen bessere Ergebnisse liefern. Die erfindungsgemäßen Gläser halten für längere Zeit und für höhere Temperaturen stand. Die erfindungsgemäßen Gläser zeichnen sich somit gegenüber den Vergleichsbeispielen nicht nur durch verbesserte Sicherheitseigenschaften, sondern auch durch verbesserte Brandschutzeigenschaften aus. Sie sind daher besonders gut für Brandschutz- und Sicherheitsverglasungen geeignet, insbesondere für Brandschutzsicherheitsglas.

**Patentansprüche**

1. Glas, **gekennzeichnet durch** folgende das Glas konstituierende Phasen

| konstituierende Phase | Min (Mol%) | Max (Mol%) |
|---|---|---|
| Reedmergnerit | 10 | 50 |
| Kalium-Reedmergnerit | 0 | 25 |
| Cordierit | 0 | 10 |
| Anorthit | 0 | 15 |
| Diopsid | 0 | 15 |
| Siliziumdioxid | 10 | 60 |
| Dibortrioxid | 0 | 10 |

wobei die Summe der Anteile von Anorthit und Diopsid in einem Bereich von 1 bis 30 Mol% liegt.

2. Glas nach Anspruch 1, **gekennzeichnet durch** folgende das Glas konstituierende Phasen

| konstituierende Phase | Min (Mol%) | Max (Mol%) |
|---|---|---|
| Reedmergnerit | 12 | 45 |
| Kalium-Reedmergnerit | 1 | 20 |
| Cordierit | 0,1 | 8 |
| Anorthit | 1 | 12 |
| Diopsid | 1 | 12 |
| Siliziumdioxid | 20 | 55 |
| Dibortrioxid | 0,5 | 8 |

3. Glas nach mindestens einem der vorhergehenden Ansprüche, wobei der Anteil an Reedmergnerit in einem Bereich von 15 bis 42 Mol% liegt.

4. Glas nach mindestens einem der vorhergehenden Ansprüche, wobei der Anteil an Kalium-Reedmergnerit in einem Bereich von 2 bis 19 Mol% liegt.

5. Glas nach mindestens einem der vorhergehenden Ansprüche, wobei der Anteil an Siliziumdioxid in einem Bereich von 25 bis 52 Mol% liegt.

6. Glas nach mindestens einem der vorhergehenden Ansprüche, wobei der Anteil an Dibortrioxid in einem Bereich von 1 bis 6 Mol% liegt.

7. Glas nach mindestens einem der vorhergehenden Ansprüche, **gekennzeichnet durch** folgende das Glas konstituierende Phasen

| konstituierende Phase | Min (Mol%) | Max (Mol%) |
|---|---|---|
| Reedmergnerit | 18,9 | 39,6 |
| Kalium-Reedmergnerit | 2,5 | 18,4 |
| Cordierit | 0,9 | 4,1 |
| Anorthit | 2,3 | 10,0 |
| Diopsid | 2 | 11,2 |
| Siliziumdioxid | 33,4 | 46,1 |
| Dibortrioxid | 1,8 | 4,9 |

8. Glas nach mindestens einem der vorhergehenden Ansprüche, wobei der nach Formel (4) berechnete $CTE_{Glas}$ in einem Bereich von 3,8 bis 4,8 ppm/K liegt.

9. Glas nach mindestens einem der vorhergehenden Ansprüche, wobei die nach Formel (5) berechnete Dichte in einem Bereich von 2,25 bis 2,45 $g/cm^3$ liegt.

10. Glas nach mindestens einem der vorhergehenden Ansprüche, wobei der nach Formel (19) berechnete Elastizitätsmodul in einem Bereich von 71 bis 79 GPa liegt und/oder wobei der nach Formel (24) berechnete Wert für $CTE_{liquid}$ in einem Bereich von 21 bis 33 ppm/K liegt und/oder wobei das Verhältnis des nach Formel (24) berechneten $CTE_{liquid}$ zum nach Formel (4) berechneten $CTE_{Glas}$ in einem Bereich von 4:1 bis 8:1 liegt und/oder wobei der nach Formel (25) berechnete Verarbeitungspunkt VA in einem Bereich von 1200°C bis 1300°C liegt und/oder wobei der nach den Formeln (25, 27) berechnete obere Kühlpunkt OK in einem Bereich von 595°C bis 650°C liegt.

11. Glasartikel aus einem Glas nach mindestens einem der vorhergehenden Ansprüche, in Form einer Scheibe mit einer Dicke von 4 bis 12 mm.

12. Glasartikel nach Anspruch 11, wobei der Glasartikel thermisch vorgespannt ist und die Oberflächendruckspannung (CS) in einem Bereich von 100 bis 160 MPa liegt.

13. Glasartikel nach Anspruch 12, wobei die 4 Punkt-Biegefestigkeit des Artikels in einem Bereich von 160 bis 220 MPa liegt.

14. Verwendung eines Glases oder Glasartikels nach mindestens einem der vorhergehenden Ansprüche als Brandschutzsicherheitsglas, als Sichtscheiben in Pyrolyseherden, als Abdeckscheiben in Mikrowellenöfen, als Kochflächen für Haushaltsgeräte, als Sichtscheiben in Fahrzeugverglasungen, als Druckverglasung und/oder als schusssichere Verglasung (Panzerglas) in Fahrzeugen und/oder Gebäuden.

15. Verfahren zur Herstellung eines Glases nach mindestens einem der Ansprüche 1 bis 10, mit den Schritten

   - Schmelzen der Glasrohstoffe,
   - optional Formen eines Glasartikels, insbesondere eines Glasrohres, eines Glasbandes, oder einer Glasscheibe, aus der Glasschmelze
   - Abkühlen des Glases.

**Europäisches Patentamt**
**European Patent Office**
**Office européen des brevets**

# EUROPÄISCHER RECHERCHENBERICHT

Nummer der Anmeldung

EP 20 21 3350

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2019/218155 A1 (SCHOTT GLASS TECH SUZHOU CO LTD [CN]) 21. November 2019 (2019-11-21) * Beispiel 8; Tabelle 1 * ----- | 1-10,12, 13,15 | INV. C03C3/091 C03B1/00 C03C1/00 |
| X | GB 1 573 218 A (ZEISS STIFTUNG) 20. August 1980 (1980-08-20) * Beispiel 2; Tabelle 2 * ----- | 1-10,12, 13,15 | |
| X | US 2009/023575 A1 (FUJITA SYUNSUKE [JP] ET AL) 22. Januar 2009 (2009-01-22) * Beispiel 6; Tabelle 1 * ----- | 1-13,15 | |
| X | EP 0 839 772 A1 (SCHOTT GLASWERKE [DE]; ZEISS STIFTUNG [DE]) 6. Mai 1998 (1998-05-06) * Beispiel V; Tabelle * ----- | 1-10,12, 13,15 | |
| X | JP 2002 047030 A (CENTRAL GLASS CO LTD) 12. Februar 2002 (2002-02-12) * Absatz [0035]; Beispiel 3; Tabelle 2 * ----- | 1-15 | RECHERCHIERTE SACHGEBIETE (IPC) |
| X | DE 195 38 743 C1 (SCHOTT GLASWERKE [DE]) 5. Dezember 1996 (1996-12-05) * Beispiel V2; Tabelle 1 * ----- | 1-10,12, 13,15 | C03C C03B |
| X | WO 2019/219009 A1 (SCHOTT GLASS TECH SUZHOU CO LTD [CN]) 21. November 2019 (2019-11-21) * Glastyp 5; Tabelle 1 * ----- | 1-10,12, 13,15 | |
| X | US 2018/194673 A1 (LIEBALD RAINER [DE] ET AL) 12. Juli 2018 (2018-07-12) * Beispiel 12; Tabelle 5 * ----- | 1-10,12, 13,15 | |

-/--

Der vorliegende Recherchenbericht wurde für alle Patentansprüche erstellt

| Recherchenort | Abschlußdatum der Recherche | Prüfer |
|---|---|---|
| München | 5. Mai 2021 | Saldamli, Saltuk |

EPO FORM 1503 03.82 (P04C03)

Europäisches
Patentamt

European
Patent Office

Office européen
des brevets

**EUROPÄISCHER RECHERCHENBERICHT**

Nummer der Anmeldung

EP 20 21 3350

| | **EINSCHLÄGIGE DOKUMENTE** | | |
|---|---|---|---|
| Kategorie | Kennzeichnung des Dokuments mit Angabe, soweit erforderlich, der maßgeblichen Teile | Betrifft Anspruch | **KLASSIFIKATION DER ANMELDUNG (IPC)** |
| X | DE 10 2016 113825 A1 (SCHOTT AG [DE]) 1. Februar 2018 (2018-02-01) * Beispiel A1; Tabelle 1 * ----- | 1-10,12, 13,15 | |
| X | WO 2019/119341 A1 (SCHOTT GLASS TECH SUZHOU CO LTD [CN]) 27. Juni 2019 (2019-06-27) * Beispiel J; Tabelle 1a * ----- | 1-10,12, 13,15 | |
| X | JP S61 77638 A (ASAHI GLASS CO LTD) 21. April 1986 (1986-04-21) * Vergleichsbeispiel 10; Tabelle 1 * ----- | 1-10,12, 13,15 | |
| X | DE 10 2009 021116 A1 (SCHOTT AG [DE]) 18. November 2010 (2010-11-18) * Beispiele 1-14; Tabellen 1,2 * ----- | 1-10,12, 13,15 | **RECHERCHIERTE SACHGEBIETE (IPC)** |

Der vorliegende Recherchenbericht wurde für alle Patentansprüche erstellt

| Recherchenort | Abschlußdatum der Recherche | Prüfer |
|---|---|---|
| München | 5. Mai 2021 | Saldamli, Saltuk |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument
.............................................................................
& : Mitglied der gleichen Patentfamilie, übereinstimmendes
Dokument

EPO FORM 1503 03.82 (P04C03)

Seite 2 von 2

**ANHANG ZUM EUROPÄISCHEN RECHERCHENBERICHT**
**ÜBER DIE EUROPÄISCHE PATENTANMELDUNG NR.**

EP 20 21 3350

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-05-2021

| Im Recherchenbericht angeführtes Patentdokument | Datum der Veröffentlichung | Mitglied(er) der Patentfamilie | Datum der Veröffentlichung |
|---|---|---|---|
| WO 2019218155 A1 | 21-11-2019 | CN 111601780 A<br>KR 20210010911 A<br>TW 202012338 A<br>US 2021078899 A1<br>WO 2019218155 A1 | 28-08-2020<br>28-01-2021<br>01-04-2020<br>18-03-2021<br>21-11-2019 |
| GB 1573218 A | 20-08-1980 | DE 2615534 A1<br>FR 2347695 A1<br>GB 1573218 A<br>JP S52135322 A<br>NL 7703600 A | 13-10-1977<br>04-11-1977<br>20-08-1980<br>12-11-1977<br>11-10-1977 |
| US 2009023575 A1 | 22-01-2009 | CN 101213150 A<br>TW I387572 B<br>US 2009023575 A1<br>WO 2007001048 A1 | 02-07-2008<br>01-03-2013<br>22-01-2009<br>04-01-2007 |
| EP 0839772 A1 | 06-05-1998 | AT 272584 T<br>DE 19643870 A1<br>EP 0839772 A1<br>JP 4195115 B2<br>JP H10182182 A<br>US 5876472 A | 15-08-2004<br>07-05-1998<br>06-05-1998<br>10-12-2008<br>07-07-1998<br>02-03-1999 |
| JP 2002047030 A | 12-02-2002 | KEINE | |
| DE 19538743 C1 | 05-12-1996 | KEINE | |
| WO 2019219009 A1 | 21-11-2019 | CN 112135803 A<br>EP 3793956 A1<br>KR 20210013709 A<br>US 2021070650 A1<br>WO 2019219009 A1 | 25-12-2020<br>24-03-2021<br>05-02-2021<br>11-03-2021<br>21-11-2019 |
| US 2018194673 A1 | 12-07-2018 | CN 102076624 A<br>DE 102008021438 A1<br>EP 2274248 A2<br>JP 2011518752 A<br>KR 20110003377 A<br>TW 201003997 A<br>US 2012057337 A1<br>US 2018194673 A1<br>WO 2009132840 A2 | 25-05-2011<br>31-12-2009<br>19-01-2011<br>30-06-2011<br>11-01-2011<br>16-01-2010<br>08-03-2012<br>12-07-2018<br>05-11-2009 |
| DE 102016113825 A1 | 01-02-2018 | KEINE | |

Für nähere Einzelheiten zu diesem Anhang : siehe Amtsblatt des Europäischen Patentamts, Nr.12/82

EPO FORM P0461

Seite 1 von 2

**ANHANG ZUM EUROPÄISCHEN RECHERCHENBERICHT**
**ÜBER DIE EUROPÄISCHE PATENTANMELDUNG NR.**

EP 20 21 3350

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-05-2021

| Im Recherchenbericht angeführtes Patentdokument | Datum der Veröffentlichung | Mitglied(er) der Patentfamilie | Datum der Veröffentlichung |
|---|---|---|---|
| WO 2019119341 A1 | 27-06-2019 | CN 111542503 A<br>EP 3728151 A1<br>KR 20200101371 A<br>US 2020317559 A1<br>WO 2019119341 A1 | 14-08-2020<br>28-10-2020<br>27-08-2020<br>08-10-2020<br>27-06-2019 |
| JP S6177638 A | 21-04-1986 | JP H0444615 B2<br>JP S6177638 A | 22-07-1992<br>21-04-1986 |
| DE 102009021116 A1 | 18-11-2010 | KEINE | |

Für nähere Einzelheiten zu diesem Anhang : siehe Amtsblatt des Europäischen Patentamts, Nr.12/82

Seite 2 von 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014119594 A1

**In der Beschreibung aufgeführte Nicht-Patentliteratur**

- *J. Am. Ceramic. Soc.,* 1958, vol. 41, 200-209
- **BLANK, K.** *Thermisch vorgespanntes Glas Teil 1, Glastechnische Berichte,* 1979, vol. 52, 1-13
- **OEL, H.J.** *Thermisches Vorspannen von Glas-scheiben, Glastechnische Berichte,* 1984, vol. 57, 1-6
- **HENNIG, M. ; WILTZSCH, S.** Thermisches Härten dünner Kalk-Natron-Flachgläser. *HVG- Mitteilung Nr.,* 2008, vol. 2137
- **BACH, H. ; NEUROTH, N.** The Properties of Optical Glass, Strengthening of Glass. Springer Verlag, 1998, 196-200
- **WERNER KIEFER.** *Thermisches Vorspannen von Gläsern niedriger Wärmeausdehnung, Glastechnische Berichte,* 1984, vol. 57 (9), 221-228
- **CARL KRAMER ; ALFRED MÜHLBAUER.** Praxishandbuch Thermoprozess-Technik. Vulkan Verlag, Essen, 2002
- **F. MAUCH, J. JÄCKLE.** Thermoviscoelastic theory of freezing of stress and strain in a symmetrically cooled infinite glass plate. *Journal of Non-Crystalline Solids,* 1994, vol. 170, 73-86
- **KURT BLANK.** *Thermisch vorgespanntes Glas, Glastechnische Berichte,* 1979, vol. 52, 1-13 51, 54
- **CONRADT R.** Chemical structure, medium range order, and crystalline reference state of multicomponent oxide liquids and glasses. *Journal of Non-Crystalline Solids,* 15. Oktober 2004, vol. 345-346, 16-23
- Einführung in die Materialwissenschaft I. **H. FÖLL.** Skript zur Vorlesung. Christian Albrechts-Universität Kiel, 79-83
- **O.V. MAZURIN ; M.V. STRELTSINA.** T.P. Shvaiko-Shvaikovskaya, Handbook of Glass Data A-C. Elsevier, 1983

- Revised Effective Ionic Radii and Systematic Studies of Interatomic Distances in Halides and Chalcogenides. **ROBERT D. SHANNON.** Crystal Radius. Acta Cryst, 1976, vol. A32, 751-767
- **VON MAKISHIMA ; MACKENZIE.** siehe "Direct calculation of Young's modulus of glass", "Calculation of bulk modulus, shear modulus and Poisson's ratio of glass. *J. Non-Crystall. Sol.,* 1973
- **VON PLUCINSKI ; ZWANZIGER.** Topological constraints and the Makishima-Mackenzie model. *J. Non-Crystall. Sol.,* 2015
- **R. BRÜNING.** On the glass transition in vitreous silica by differential thermal analysis measurements. *Journal of Non-Crystalline Solids,* 2003, vol. 330, 13-22
- **GREAVES, G. ; GREER, A. ; LAKES, R. ; ROUXEL, T.** Poisson's ratio and modern materials. *Nature Mater,* 2011, vol. 10, 823-837
- **ALBERTO GARCIA ; MARVON COHEN.** *First Principles Ionicity Scales, Phys. Rev. B,* 1993
- **G. ADAM ; J.H. GIBBS.** On the Temperature Dependence of Cooperative Relaxation Properties in Glass-Forming Liquids. *J. Chem. Phys.,* 1965, vol. 43, 139-145
- **CHARLES AUSTEN ANGELL.** Thermodynamic aspects of the glass transition in liquids and plastic crystals. *Pure & Appl. Chem.,* 1991, vol. 63 (10), 1387-1392
- **APPLEMAN, D.E. ; CLARK, J.R.** Crystal structure of reedmergnerite, a boron albite, and its relation to feldspar crystal chemistry. *Am. J. Sci.,* 1965, vol. 50, 1827-1850
- *Mineralogical Magazine,* 1993, vol. 57, 157-164